# EUROPÄISCHE PATENTSCHRIFT

(11) **EP 3 444 768 B1**
(45) Veröffentlichungstag und Bekanntmachung des Hinweises auf die Patenterteilung: **12.05.2021**
(21) Anmeldenummer: 18193356.5
(22) Anmeldetag: 20.02.2014
(51) Int. Cl.: G06K 7/10, G06Q 30/02

(54) **SYSTEM FÜR ZEITSCHLITZKOMMUNIKATION**
TIME SLOT COMMUNICATION SYSTEM
SYSTÈME DE COMMUNICATION PAR CRÉNEAU TEMPOREL

(43) Veröffentlichungstag der Anmeldung: 20.02.2019
(62) Teilanmeldung aus: 14707354.8
(73) Patentinhaber: SES-imagotag GmbH, 8072 Fernitz-Mellach (AT)
(72) Erfinder: Rößl, Andreas, A-8042 Graz (AT); Hechenblaickner, Andreas, A-8042 Graz (AT); Frießnegg, Christian, A-8042 Graz (AT)
(74) Vertreter: Schneider, Michael

(56) Entgegenhaltungen:
- EP-A1- 0 710 916
- EP-A1- 2 036 462
- EP-A2- 0 921 460
- WO-A1-03/073261
- US-A1- 2002 006 234
- US-A1- 2005 151 701
- US-A1- 2012 326 846

## Beschreibung

### TECHNISCHES FELD

Die Erfindung betrifft ein System zur Kommunikation mit einem Funk-Tag.

### HINTERGRUND

Ein eingangs erwähntes System ist beispielsweise aus der DE 44 39 074 A1 bekannt. Gemäß diesem Dokument müssen alle Funk-Tags zum Zeitpunkt der Aussendung einer Präambel in ihrem Aktiv-Zustand sein, um eine synchrone Datenübertragung zu den Funk-Tags in ihnen zugeordneten Zeitfenstern zu ermöglichen. Diese Maßnahme ist von geringer Energie- bzw. Systemeffizienz. Weiterhin ist aus der WO 2010/004349 A1 ein System bekannt, bei dem die Funk-Tags individuellen Zeitschlitzen zugeordnet sind. Zur Synchronisierung mit der Kommunikationsstation wird von dieser eine Präambel ausgesandt. In dieser Präambel sind mehrere Datenpakete enthalten, die eine Abweichung zu einem Referenzzeitpunkt für den synchronen Zustand zwischen Kommunikationsstation und Funk-Tag angeben. Die Funk-Tags gehen zu einem Zeitpunkt, der durch ihre interne Zeitbasis definiert ist und innerhalb der Zeitspanne des Auftretens der Präambel liegt, von einem Schlaf-Zustand in einen Aktiv-Zustand und empfangen darauf hin eines der Datenpakete. Bei den Funk-Tags wird unter Benutzung des jeweiligen empfangenen Datenpakets und der darin codierten Abweichung vom Referenzzeitpunkt die interne Zeitbasis korrigiert, um den nächsten Aufwachzeitpunkt neu einzustellen und folglich einen synchronen Zustand mit der Kommunikationsstation beizubehalten. Die zur Anwendung kommende Präambel hat sich jedoch als nachteilig erwiesen, weil sie ein relativ hohes Datenaufkommen verursacht.

Weiter ist aus der US2012/0326846A1 ein System bekannt, bei dem ein Server ein "time-sharing control Signal" an Funk-Tags aussendet, um ihren Aufwachzeitpunkt festzulegen.

Weiterhin ist aus der EP0710916A1 ein System bekannt, bei dem im zeitlichen Verlauf von Zeitschlitzen die diesen Zeitschlitzen zugeordneten Funk-Tags individuell adressierbar sind. Zudem ist aus der US2005/151701A1 ein System zum Aktualisieren der Anzeige von elektronischen Preisetiketten bekannt.

Die Erfindung hat sich die Aufgabe gestellt, ein System bereitzustellen, sodass die eingangs erörterten Probleme vermieden sind.

Diese Aufgabe wird durch ein System gemäß Anspruch 1 gelöst.

Der Gegenstand der Erfindung ist daher ein System, aufweisend eine Kommunikationsstation zum Kommunizieren mit einer Anzahl von Funk-Tags mit Hilfe eines Zeitschlitzkommunikationsverfahrens, bei dem in sich wiederholender Folge eine Anzahl von Zeitschlitzen pro Zeitschlitzzyklus zur Kommunikation bereitstehen und jeder Zeitschlitz durch ein eindeutiges Zeitschlitzsymbol gekennzeichnet ist, wobei die Kommunikationsstation dazu ausgebildet ist, für den momentan vorliegenden Zeitschlitz ein Synchronisations-Datensignal aufweisend das Zeitschlitzsymbol auszusenden, und wobei ein Funk-Tag ausgebildet ist zum Wechseln von einem Schlaf-Zustand in einen Aktiv-Zustand zu einem Aufwachzeitpunkt, und zum Empfangen des Synchronisations-Datensignals im Aktiv-Zustand, und, wenn das empfangene Zeitschlitzsymbol einen für ihn bestimmten Zeitschlitz anzeigt, zum Definieren eines zu dem nächsten Auftreten des für ihn bestimmten Zeitschlitz korrespondierenden neuen Aufwachzeitpunkts in einem auf den momentan vorliegenden Zeitschlitzzyklus folgenden Zeitschlitzzyklus.

Mit den erfindungsgemäßen Maßnahmen geht der Vorteil einher, dass ein Synchronismus zwischen der Kommunikationsstation und einem Funk-Tag auf möglichst einfache und trotzdem äußerst robuste Weise erkannt, beibehalten und während des Betriebs des Systems gewährleistet ist. Im Unterschied zu bekannten Maßnahmen müssen nun nicht mehr alle Funk-Tags gleichzeitig zu einem bestimmten Zeitpunkt in ihrem Aktiv-Zustand sein, um mit dem durch die Kommunikationsstation definierten Zeitraster des Zeitschlitzkommunikationsverfahren synchron zu bleiben. Ebenso kann auf das Empfangen und Auswerten von Daten verzichtet werden, die eine zeitliche Abweichung von einem Referenzzeitpunkt anzeigen, was sich als sehr aufwändig im Hinblick auf das Verarbeiten dieser Daten als auch auf das Datenaufkommen bei der Kommunikation mit der Kommunikationsstation erwiesen hat. Gemäß der Erfindung reicht es aus, dass jeder Funk-Tag, der sich an der Kommunikation mit der Kommunikationsstation beteiligt, über das Zeitschlitzsymbol Bescheid weiß, welches den für ihn bestimmten Zeitschlitz anzeigt. Jeder der Funk-Tags orientiert sich also individuell an dem Auftreten eines für ihn relevanten Zeitschlitzsymbols, identifiziert das für ihn relevante Zeitschlitzsymbol und definiert seinen nächsten Aufwachzeitpunkt, um mit dem durch die Kommunikationsstation vorgegebenen Timing des Zeitschlitzkommunikationsverfahrens. Dabei reicht es völlig aus, dass das Zeitschlitzsymbol den jeweiligen Zeitschlitz eindeutig identifiziert, z.B. mit einer für jeden Zeitschlitz individuellen Zeitschlitzkennung. Weitere Informationen kodiert in das Synchronisations-Datensignal, so wie in Bezug auf die bekannten Maßnahmen erörtert, sind nicht nötig, um einen Funk-Tag synchron mit der Kommunikationsstation zu betreiben. Der Funk-Tag stellt seinen Synchronismus mit der Kommunikationsstation alleine durch den Umstand des Erkennens des Zeitschlitzsymbols fest, das zu dem von ihm erwarteten Zeitpunkt bzw. in einem Erwartungszeitfenster auftritt und den für ihn bestimmten Zeitschlitz anzeigt.

Nachdem der Funk-Tag seinen Synchronismus wie zuvor erörtert festgestellt hat, reicht es grundsätzlich aus, wenn er wieder in den Schlaf-Zustand wechselt, weil der nächste Aufwachzeitpunkt automatisch durch den ihm bekannten Zeitraster des Zeitschlitzkommunikationsverfahrens bekannt ist. Das Definieren des neuen Aufwachzeitpunktes kann sich somit darauf beschränken, dass eine z.B. Zeitsteuerstufe (z.B. ein Timer) des Funk-Tags mit den bereits zuvor zum Wechseln vom Schlaf-Zustand in den Aktiv-Zustand benutzen Timing-Parameter neu gestartet wird. Danach kann der Funk-Tag wieder in den Schlaf-Zustand wechseln und dort verharren, bis dass ausgelöst durch die Zeitsteuerung wieder ein Aufwachen und Wechseln von dem Schlaf-Zustand in den Aktiv-Zustand zu dem neuen Aufwachzeitpunkt in dem nächsten Zeitschlitzzyklus durchgeführt wird. Der Funk-Tag muss jedoch nicht zwingend für den Rest des für ihn bestimmten Zeitschlitzes im Schlaf-Zustand verharren, sondern kann auch während des Zeitschlitzes oder auch des Zeitschlitzzyklus weitere Aufgaben in einem Aktiv-Zustand bearbeiten. Die zuvor erörterte Zeitsteuerung arbeitet dann im Hintergrund unabhängig von seinen weiteren Aktivitäten. Das Definieren des neuen Aufwachzeitpunktes kann durch die Bestimmung einer absoluten oder relativen Zeitangabe erfolgen, wie z.B. relativ zum Zeitpunkt des Auftretens des Synchronisations-Datensignals oder relativ zum Zeitpunkt, zu dem nach dem Aktiv-Zustand wieder der Schlaf-Zustand eingenommen wird oder auch relativ zum Zeitpunkt zu dem das Ende des Synchronisations-Datensignals eintritt. Das Definieren des neuen Aufwachzeitpunktes kann jedoch auch so verstanden werden, dass die Dauer des nach dem Aktiv-Zustand, in dem das Zeitschlitzsymbol empfange wurde, anschließenden Schlaf-Zustands oder auch die Summe der Dauer aus Schlaf-Zustand und Aktiv-Zustand oder auch die Summe der Dauer mehrerer solcher Zustandsfolgen den neuen Aufwachzeitpunkt bestimmt. Da jeder Funk-Tag seine eigene Zeitsteuerstufe betreibt und exemplarische Streuungen des Verhaltes der jeweiligen elektronischen Komponenten nicht auszuschließen sind, kann das Definieren des neuen Aufwachzeitpunktes auch eine Kompensation einer für jeden Funk-Tag individuell vorliegenden Drift seiner Zeitbasis beinhalten. Zu diesem Zweck kann beispielsweise im Funk-Tag eine Zeitdifferenz zwischen dem erwarteten Auftreten des Synchronisations-Datensignal mit dem Zeitschlitzsymbol, das den für den jeweiligen Funk-Tag bestimmten Zeitschlitz anzeigt, und dem tatsächlichen Auftreten gemessen werden und bei der Zeitsteuerstufe zur Korrektur ihres Timings berücksichtigt werden. Die Kompensation kommt jedoch nur bei Festgestelltem Synchronismus zum Einsatz. Wurde jedoch an Stelle des erwarteten Zeitschlitzsymbols ein anderes Zeitschlitzsymbol empfangen, liegt kein Synchronismus vor und der Funk-Tag müsste eine Neu-Synchronisierung durchführen, worauf nachfolgend noch eingegangen ist.

Bei dem Zeitschlitzkommunikationsverfahren kommen z.B. innerhalb von n Sekunden, z.B. 15 Sekunden, m Zeitschlitze, z.B. 255 Zeitschlitze, zum Einsatz. Die n Sekunden bilden einen Zeitschlitzzyklus. In diesem Zeitschlitzkommunikationsverfahren stehen also m Zeitschlitze innerhalb eines Zeitschlitzzyklus für eine Kommunikation mit den Funk-Tags zur Verfügung. Jeder der Funk-Tags kann einem der Zeitschlitze zugeordnet sein, wobei einem bestimmten Zeitschlitz auch mehrere Funk-Tags zugeordnet sein können.

Ein Funk-Tag weist im Wesentlichen eine Funk-Kommunikationsstufe, auch Transceiver genannt, und eine damit zusammenwirkende Logikstufe auf, die logische Funktion eines Tag bereitstellt. Die Logikstufe kann z.B. vollständig durch Hardware realisiert sein oder einen Mikroprozessor und Speicherbausteine oder einen Mikrokontroller mit integrierten Speicherbausteinen aufweisen, sodass in den Speicherbausteinen gespeicherte Software abarbeitbar ist. Ein Tag kann mit Hilfe seiner Funk-Kommunikationsstufe ein Funk-Signal empfangen, in dem Funk-Signal enthaltene Empfangsdaten mit Hilfe der Logikstufe verarbeiten und gegebenenfalls mit Hilfe der Logikstufe Antwortdaten generieren und diese über die Funk-Kommunikationsstufe wieder als ein Funk-Signal abgeben. Die Funk-Kommunikationsstufe weist Mittel zur Funkkommunikation und zur Konvertierung von analogen Signalen in digitale Signale und umgekehrt auf.

Ein solcher Funk-Tag kann zu seiner Energieversorgung einen Energiespeicher, wie z.B. eine Batterie oder ein Solarpaneel gekoppelt mit einer aufladbaren Batterie aufweisen. Um möglichst energieeffizient zu arbeiten, weisen die Funk-Tags verschiedene Betriebs-Zustände auf. Ein Funk-Tag weist in dem Aktiv-Zustand einen relativ hohen Energieverbrauch auf. Der Aktiv-Zustand liegt z.B. beim ein Senden oder Empfangen von Daten, beim Display-Update, beim Batteriespannungsmessen usw. vor. In dem Schlaf-Zustand liegt dagegen ein relativ niedriger Energieverbrauch vor. Bevorzugt werden so viele elektronische Komponenten wie möglich von der Stromversorgung getrennt bzw. abgeschattet oder zumindest in einem Modus mit möglichst geringem Energiebedarf betrieben. Der Aktiv-Zustand liegt vorwiegend in dem für den Funk-Tag bestimmten Zeitschlitz zur Kommunikation mit der Kommunikationsstation vor. In dem Aktiv-Zustand weist der Funk-Tag z.B. eine Empfangsbereitschaft auf, um Befehle und gegebenenfalls auch Empfangs-Daten von der Kommunikationsstation zu empfangen und mit Hilfe der Logikstufe zu verarbeiten. Im Aktiv-Zustand können auch mit Hilfe der Logikstufe Sende-Daten generiert und an die Kommunikationsstation kommuniziert werden. Außerhalb des für den Funk-Tag bestimmten Zeitschlitzes wird der Funk-Tag vorwiegend in dem energiesparenden Schlaf-Zustand betrieben. In dem Schlaf-Zustand führt die Logikstufe bzw. die Zeitsteuerstufe nur jene Aktivitäten durch, die für das Timing zum rechtzeitigen Aufwachen nötig sind, damit der Funk-Tag zum nächsten für ihn bestimmten Zeitschlitz zum Empfang des Synchronisations-Datensignals und / oder zur Kommunikation mit der Kommunikationsstation bereit ist. Um energieeffizient zu arbeiten und damit eine möglichst lange Lebensdauer des Funk-Tags zu erreichen besteht die grundlegende Betriebsstrategie darin, den synchronen Funk-Tag so lange wie möglich im Schlaf-Zustand zu halten und nur dann, wenn unbedingt nötig, zwecks Datenübertragung mit der Kommunikationsstation für eine möglichst kurze Zeitspanne im Aktiv-Zustand zu betreiben.

Die Kommunikationsstation kann eine für sich autonome Einrichtung mit Serverfunktionalität sein. Bevorzugt, wird die Kommunikationsstation eine Schnittstelle zwischen einer kabelgebundenen Kommunikation mit z.B. einer Datenverarbeitungseinrichtung (z.B. einem Server) und einer kabellosen, funkbasierten Kommunikation mit den Funk-Tags bilden.

Um für die Kommunikation mit der Kommunikationsstation verfügbar zu sein, können sich die Funk-Tags zunächst bei der Kommunikationsstation registrieren bzw. ihr zugeordnet werden.

Weitere, besonders vorteilhafte Ausgestaltungen und Weiterbildungen der Erfindung ergeben sich aus den abhängigen Ansprüchen sowie der nachfolgenden Beschreibung.

Mit den Maßnahmen gemäß der Erfindung lässt sich nicht nur der Synchronismus zwischen der Kommunikationsstation und einem Funk-Tag auf einfache Weise sicherstellen, sondern auch ein Funk-Tag, der in einen asynchronen Zustand eingetreten ist, unproblematisch wieder in das zeitliche Schema das Zeitschlitzkommunikationsverfahrens zurückführen, also wieder synchronisieren. Zu diesem Zweck wechselt ein solcher asynchroner Funk-Tag nicht periodisch, so wie dies im synchronen Zustand der Fall wäre, sondern z.B. zu einem beliebigen Zeitpunkt ein einziges Mal von seinem Schlaf-Zustand in seinen Aktiv-Zustand und verharrt in diesem Aktiv-Zustand in der Empfangsbereitschaft. Wenn in einer bestimmten Zeitspanne wie z.B. einer Zeitschlitzdauer nichts empfangen wurde, wechselt er wieder in den Schlaf-Zustand und wiederholt zu einem andern Zeitpunkt den Empfangsversuch. Sobald ein Synchronisations-Datensignal empfangen wird, wird das Zeitschlitzsymbol ausgewertet. Das dabei empfangene Zeitschlitzsymbol zeigt mit höchster Wahrscheinlichkeit einen für ihn nicht bestimmten Zeitschlitz an, was vom Funk-Tag autonom festgestellt wird. Der Funk-Tag kennt die Systematik des Auftretens der Zeitschlitzsymbole und kann nach Auswertung des empfangenen Zeitschlitzsymbols selbstständig entscheiden, ob er noch in dem vorliegenden Zeitschlitzzyklus (erster Fall) oder erst im darauffolgenden Zeitschlitzzyklus (zweiter Fall) mit dem für ihn bestimmten Zeitschlitz rechnen kann. Für den ersten Fall ist der Funk-Tag zum Definieren eines zu dem nächsten Auftreten des für ihn bestimmten Zeitschlitz korrespondierenden neuen Aufwachzeitpunkts in dem momentanen vorliegenden Zeitschlitzzyklus ausgebildet. Der Funk-Tag stellte durch Auswertung des empfangenen Zeitschlitzsymbols und unter Kenntnis der Systematik des Auftretens der Zeitschlitzsymbole fest, dass der für ihn bestimmte Zeitschlitz noch in dem momentan vorliegenden Zeitschlitzzyklus auftreten wird. Für den zweiten Fall ist der Funk-Tag zum Definieren eines zu dem nächsten Auftreten des für ihn bestimmten Zeitschlitz korrespondierenden neuen Aufwachzeitpunkts in jenem dem momentan vorliegenden Zeitschlitzzyklus folgenden Zeitschlitzzyklus ausgebildet. Der Funk-Tag stellte durch Auswertung des empfangenen Zeitschlitzsymbols und unter Kenntnis der Systematik des Auftretens der Zeitschlitzsymbole fest, dass der für ihn bestimmte Zeitschlitz in dem momentan vorliegenden Zeitschlitzzyklus nicht mehr auftreten wird, weil er in diesem Zeitschlitzzyklus bereits in der Vergangenheit auftrat. Wie einleitend zum synchronen Zustand erörtert, kommt auch für diese Art der Definition des neuen Aufwachzeitpunkts besagte Zeitsteuerung zum Einsatz, wobei die Zeitsteuerung nun mit jenem Timing-Parameter betrieben wird, mit dem der erwünschte Eintritt in den synchronen Zustand erreicht wird. Der zu wählende Timing-Parameter ergibt sich für den Funk-Tag aus der inhärenten Kenntnis des zur Anwendung kommenden Zeitschlitzkommunikationsverfahrens, er wird also von der Logikstufe bestimmt.

Das Definieren des für den jeweiligen Funk-Tag richtigen Aufwachzeitpunkts erfolgt bei dem Funk-Tag unter Kenntnis der Parameter des Zeitschlitzkommunikationsverfahrens. Diese Parameter können vom Funk-Tag bei seiner Registrierung von der Kommunikationsstation abgefragt bzw. an ihn übertragen werden oder bereits vorab im Funk-Tag einprogrammiert sein. In beiden Fällen ist es zweckmäßig, wenn der Funk-Tag eine Speicherstufe zum Speichern der Parameter des Zeitschlitzkommunikationsverfahren aufweist und der Funk-Tag zum Zugreifen auf und Berücksichtigen diese Parameter zwecks Definition des neuen Aufwachzeitpunkts ausgebildet ist. Die Parameter können alle Details des Timings des Zeitschlitzkommunikationsverfahren repräsentieren, wie etwa Parameter betreffend zeitliche Abläufe zum Kommunizieren zwischen der Kommunikationsstation und dem Funk-Tag, Parameter betreffend vordefinierte Zeitpunkte oder Zeitabschnitte, aber auch Parameter betreffend die Grundstruktur des Zeitschlitzkommunikationsverfahrens, wie z.B. Anzahl der Zeitschlitze, die Dauer eines Zeitschlitzes, die Dauer des Zeitschlitzzyklus, oder auch als Parameter die explizit angegebenen Zeitschlitzsymbole zur Identifizierung der einzelnen Zeitschlitze oder auch Algorithmen zur Berechnung der Zeitschlitzsymbole. Unter Zuhilfenahme dieser Parameter kann ein asynchroner Funk-Tag autonom und automatisch leicht klären, ob auf Grundlage des soeben empfangenen Zeitschlitzsymbols der für ihn bestimmte Zeitschlitz noch innerhalb des momentan vorliegenden Zeitschlitzzyklus zu erwarten ist oder ob der für ihn bestimmte Zeitschlitz im vorliegenden Zeitschlitzzyklus bereits der Vergangenheit angehört und folglich der nächste für ihn bestimmte Zeitschlitz erst im nächsten Zeitschlitzzyklus auftreten wird. Der betroffene Funk-Tag berechnet im Aktiv-Zustand den neuen Aufwachzeitpunkt, wechselt in den Schlaf-Zustand und wechselt zu dem berechneten Aufwachzeitpunkt in den Aktiv-Zustand, empfängt das Zeitschlitzsymbol des für ihn bestimmten Zeitschlitzes und befindet sich danach wieder im synchronen Zustand. Soweit im vorliegenden Zeitschlitz keine weiteren Aktivitäten von ihm erwartet werden, wechselt er erst wieder im nächsten Zeitschlitzzyklus in den Aktiv-Zustand, um das Synchronisations-Datensignal in dem für ihn bestimmten Zeitschlitz zu empfangen.

Gemäß einem weiteren Aspekt der Erfindung kann der Funk-Tag eine Speicherstufe zum Speichern einer Repräsentation des Zeitschlitzsymbols, das den für ihn bestimmten Zeitschlitz anzeigt, aufweisen.

Die beiden Speicherstufen (Speicherstufe zum Speichern der Parameter und Speicherstufe zum Speichern der Repräsentation) können durch einen einzigen Speicherchip oder durch unterschiedliche realisiert sein. Sie können in diesem Speicherchip an unterschiedlichen Speicherbereichen vorgesehen sein und unterschiedlichen Zugriffsrechten unterworden sein. Sie können z.B. aufgrund von sicherheitstechnischen Überlegungen jedoch auch mit unterschiedlichen Speicherbausteinen realisiert sein.

Es hat sich als vorteilhaft erwiesen, wenn die Repräsentation des Zeitschlitzsymbols mit Hilfe einer den Funk-Tag eindeutig identifizierenden Hardware-Adresse des Funk-Tags gebildet ist und in die zweite Speicherstufe unveränderbar einprogrammiert ist. Damit lassen sich unerwünschte, mit unter auch betrügerische Manipulationen der Funk-Tags zuverlässig vermeiden. Da jeder Funk-Tag eine eindeutige Hardware-Adresse aufweist, lässt sich somit auch eine einem strikten und unbeeinflussbaren Schema folgende Zuordnung zu einem Zeitschlitz schaffen.

Besonders bevorzugt ist besagte Repräsentation des Zeitschlitzsymbols durch die niederwertigsten Bits oder das niederwertigste Byte der Hardware-Adresse realisiert, wobei mit dieser Gruppe der verwendeten Bits zumindest die Anzahl der im Zeitschlitzzyklus existierenden Zeitschlitze abbildbar sein muss. So werden z.B. bei 256 Zeitschlitzen nur die niederwertigsten 8 Bits oder ein Byte und im Fall von 128 Zeitschlitzen nur die niederwertigsten 7 Bits der Hardware-Adresse benötigt. In diesem Zusammenhang sei auch erwähnt, dass es von Vorteil ist, wenn die Anzahl der Zeitschlitze einer 2-er Potenz entspricht.

Es sei erwähnt, dass die Repräsentation des Zeitschlitzsymbols bzw. das Zeitschlitzsymbol selbst auch aus einer Kombination der zuvor erwähnten Hardware-Adresse und einem vorprogrammierten anderen Wert gebildet sein kann.

Der Funk-Tag ist zum Prüfen ausgebildet, ob ein ihm bekanntes Zeitschlitzsymbol mit jenem übereinstimmt, das beim Empfangen der Synchronisations-Datensignals vorliegt. Die Prüfung kann z.B. unter Zuhilfenahme eines Algorithmus erfolgen, der beim Abarbeiten einer Software, die den Algorithmus beschreibt, auf einem Prozessor des Funk-Tags ein Prüfungsergebnis liefert. Der Algorithmus kann z.B. aus dem Empfangenen Zeitschlitzsymbol auf die dem Funk-Tag bekannte Repräsentation umrechnen und dann einen Vergleich durchführen. Der Funk-Tag kann jedoch auch umgekehrt ausgehend von der dem Funk-Tag bekannten Repräsentation auf ein zu erwartendes Zeitschlitzsymbol umrechnen und dann das empfangene mit dem zu erwartenden Zeitschlitzsymbol vergleichen. Es ist jedoch von Vorteil, wenn ein einfacher Vergleich zwischen zwei z.B. binär codierten Symbolen durchgeführt wird, weil dies auf Prozessorebene durch einen einfachen Registervergleich sehr rasch und mit einem relativ niedrigen Energiebedarf erfolgen kann.

Grundsätzlich kann für jeden Zeitschlitz eine vorab im System definierte und eindeutige Identifikation zur Anwendung kommen. Es hat sich jedoch als besonders vorteilhaft erwiesen, wenn die Kommunikationsstation zum Generieren des Zeitschlitzsymbols als die laufende Nummer ("auch Slot ID") des jeweiligen Zeitschlitzes entsprechend dem Auftreten in der Reihenfolge der Zeitschlitze im Zeitschlitzzyklus ausgebildet ist. Es ist also in jedem Zeitschlitzzyklus dem ersten Zeitschlitz die Nummer 1, dem zweiten Zeitschlitz die Nummer 2 usw. zugeordnet. Damit lässt sich unter Vermeidung von aufwändigen Algorithmen ein Zeitschlitzsymbol auf möglichst einfache Weise generieren, dass auch in der Datenübertragung von der Kommunikationsstation hin zum Funk-Tag einen minimalen Datenverkehr mit sich bringt. Es muss nur ein einziges Datenpaket ausgesandt werden, das zur Synchronisierung dient. Somit ist auch das gesamte pro Zeitschlitz oder auch pro Zeitschlitzzyklus zur Verfügung stehende Datenvolumen von der Übertragung des Zeitschlitzsymbols kaum beeinflusst. Daher ist die Kanalbelegung optimiert, weil die Anzahl der Datenpakete pro Zeitschlitz bzw. auch pro Zeitschlitzzyklus, die für die Synchronisierung benötig werden, möglichst klein ist. Die Anzahl der Zeitschlitze, die im Zeitschlitzzyklus vorkommen, determiniert letztendlich die Anzahl der Bits, die zur Erzeugung der jeweiligen Nummer des Zeitschlitzes (also zu ihrer Nummerierung) nötig sind und das für die Synchronisierung benötige Datenpaket bilden. Weil jedes Bit zwei Zustände anzeigen kann, ist es von Vorteil, wenn die Anzahl der Zeitschlitze pro Zeitschlitzzyklus eine 2er-Potenz ist. Folglich kann auch die Zeitdauer zum Empfangen des Zeitschlitzsymbols entsprechend kurz ausfallen, was sich positiv auf die Energiebilanz des Funk-Tags auswirkt. Insbesondere dann, wenn auf der Seite des Funk-Tags Teile der Hardware-Adresse als Repräsentation des dem Funk-Tag bekannten Zeitschlitzsymbols zur Anwendungen kommen, lässt sich auch die Prüfung auf Übereinstimmung des empfangenen mit dem gespeicherten Zeitschlitzsymbol rasch und einfach durchführen. Die Funk-Tags synchronisieren sich mit der Kommunikationsstation bzw. dem durch sie definierten Zeitraster des Zeitschlitzkommunikationsverfahrens auf möglichst einfache Weise anhand der Nummer des Zeitschlitzes.

Grundsätzlich könnte das Synchronisations-Datensignal ausschließlich durch das Zeitschlitzsymbol gebildet sein und weitere zur Kommunikation zwischen Kommunikationsstation und einem Funk-Tag benötigte Kommunikationsparameter, wie z.B. Adressdaten zur Adressierung eines Tags oder Befehlsdaten zur Übermittlung von Befehlen aus dem Synchronisations-Datensignal ausgegliedert sein. Da, wie vorangehend erörtert wurde, das Zeitschlitzsymbol ein extrem kompakter Indikator zur Synchronisierung der Kommunikation im System ist, bietet es sich an, zusätzlich zu dem Zeitschlitzsymbol weitere Informationen in das Synchronisierungs-Datensignals einzubetten, worauf nachfolgend eingegangen wird.

Daher ist gemäß einem weiteren Aspekt der Erfindung die Kommunikationsstation zum Einbetten von Adressdaten in das Synchronisations-Datensignal ausgebildet, mit deren Hilfe eine Anzahl von Funk-Tags pro Zeitschlitz, der für besagte Funk-Tags bestimmt ist, individuell adressierbar ist, und der Funk-Tag, wenn das empfangene Zeitschlitzsymbol einen für ihn bestimmten Zeitschlitz anzeigt, ist zum Auswerten des Synchronisations-Datensignals hinsichtlich der enthaltenen Adressdaten und zum Prüfen, ob er individuell adressiert ist, ausgebildet.

In Analogie zu der Nutzung der Hardware-Adresse eines Funk-Tags im Zusammenhang mit dem Zeitschlitzsymbol ist es auch von Vorteil, wenn die Kommunikationsstation zum Generieren der Adressdaten unter Benutzung von einem oder mehreren Bits oder Bytes einer einen Funk-Tag eindeutig identifizierenden Hardware-Adresse des Funk-Tags, insbesondere unter Auslassung der niederwertigsten Bits oder des niederwertigsten Bytes, ausgebildet ist. Im vorliegenden System wird also die Hardware-Adresse des Funk-Tags zur eindeutigen Adressierung jedes Funk-Tags genutzt. Einerseits wird mit den niederwertigsten Bits oder dem niederwertigsten Byte definiert, welcher Zeitschlitz für den Funk-Tag bestimmt ist. Es kann somit eine relativ hohe Anzahl von Funk-Tags genau einem einzigen Zeitschlitz zugeordnet sein, um sich mit diesem Zeitschlitz synchron zu halten und auch in diesem Zeitschlitz individuell adressierbar zu sein. Die individuelle Adressierung eines speziellen Funk-Tags erfolgt nun mit weiteren Bits oder Bytes der individuellen Hardware-Adresse dieses Funk-Tags. Diese Maßnahme stellt zudem einen erheblichen Beitrag zur Systemeffizienz dar, weil der betroffene Funk-Tag, der ja gerade im Aktiv-Zustand ist, um das Zeitschlitzsymbol zu empfangen, nicht zwischenzeitlich in den Schlaf-Zustand wechseln muss und zu einem späteren Zeitpunkt in dem vorliegenden Zeitschlitz wieder in den Aktiv-Zustand wechseln muss, um zu prüfen, ob Adressdaten vorliegen. Vielmehr wird für alle gleichzeitig auf das Synchronisations-Datensignal lauschenden Funk-Tags in dieser relativ kurzen Phase des Aktiv-Zustands ersichtlich, ob sie adressiert sind oder nicht.

Analog zu dem zuvor gesagten über das Einbetten von Adressdaten liegt ein weiterer erheblicher Beitrag zur Systemeffizienz vor, wenn die Kommunikationsstation zum Einbetten von Befehlsdaten in das Synchronisations-Datensignal ausgebildet ist, mit deren Hilfe ein Befehl an einen Funk-Tag in einem Zeitschlitz, der für besagten Funk-Tag bestimmt ist, übermittelbar ist, und - der Funk-Tag, wenn das empfangene Zeitschlitzsymbol einen für ihn bestimmten Zeitschlitz anzeigt, zum Auswerten des Synchronisations-Datensignals hinsichtlich der enthaltenen Befehlsdaten und zum Ausführen des Befehls ausgebildet ist. So kann beispielsweise ohne eine individuelle Adressierung ein Befehl an alle einem bestimmten Zeitschlitz zugewiesenen Funk-Tags übermittelt werden, der dann von einer relativ großen Gruppe von Funk-Tags exekutiert wird.

Grundsätzlich könnte der Funk-Tag bereits durch ein Erkennen seiner individuellen Adressierung eine standardisierte (vordefinierte) Aufgabe ausführen, ohne dass ein expliziter Befehl empfangen werden müsste. Als besonders vorteilhaft hat es sich jedoch erweisen, wenn Adressdaten zur Adressierung eines individuellen Funk-Tags und Befehlsdaten zur Übermittlung eines Befehls an diesen individuellen Funk-Tag übermittelt werden und der Funk-Tag dazu ausgebildet ist, die Befehlsdaten auszuwerten und den Befehl auszuführen, wenn er mit Hilfe der Adressdaten individuell adressiert ist. Somit lässt sich in einer mitunter relativ großen Gruppe von Funk-Tags ein Befehl für einen einzigen Funk-Tag übermitteln.

Gemäß einem weiteren Aspekt des Systems ist es von Vorteil, dass der Funk-Tag zum Ausführen eines Befehls als Einfach-Zeitschlitzbefehl und Abschließen des ausgeführten Befehles innerhalb eines einzigen Zeitschlitzes, in dem der Befehl empfangen wurde, ausgebildet ist. Dies erlaubt eine rasche und kompakte Behandlungen von Aufträgen, welche Aufträge über die Kommunikationsstation an den Funk-Tag herangetragen werden. Solche Einfach-Zeitschlitzbefehle können beispielsweise ein sogenannter "PING"-Befehl sein, mit dem nur geprüft wird, ob ein bestimmter Funk-Tag existiert, oder ein interner Verarbeitungsbefehl, der nach außen hin möglichst wenig Datenverkehr verursacht, wie z.B. ein Umschaltbefehl zum Umschalten von einer Speicherpage bzw. -seite auf eine andere Speicherpage bzw. -seite. Eine Speicherpage ist ein logischer Bereich (eine Adressbereich) im Speicher, in dem z.B. Daten für z.B. ein Bild abgelegt bzw. gespeichert sind. Mit dem Einfach-Zeitschlitzbefehl werden keine Daten zur Verarbeitung (z.B. Daten, die der Anzeige mit Hilfe eines Displays dienen usw.) durch den Funk-Tag an den Funk-Tag übertragen, sondern nur Befehle, die ggf. zu einer internen Verarbeitung von Daten führen oder den Funk-Tag zu einer Übertragung von Information an die Kommunikationsstation veranlassen.

In diesem Zusammenhang hat es sich auch als vorteilhaft erweisen, wenn der Funk-Tag beim Abschließen des ausgeführten Befehls zum Generieren von Bestätigungsdaten und zum Abgeben der Bestätigungsdaten in jenem Zeitschlitz ausgebildet ist, in dem der Befehl empfangen wurde. Somit bleibt auch ein durch die Bestätigung bedingter Datenverkehr auf jenen Zeitschlitz beschränkt, in dem der Befehl übermittelt wurde. Nachfolgende Zeitschlitze bleiben datenmäßig unbelastet, was sich positiv auf die Systemperformance auswirkt.

Weiterhin kann ein Funk-Tag zum Abgeben der Bestätigungsdaten in einem ersten Teil (z.B. die erste Hälfte oder das erste Drittel) des Zeitschlitzes ausgebildet sein, der zeitlich nachfolgend an das Synchronisations-Datensignal lokalisiert ist und einen zweiten daran anschließenden Teil des Zeitschlitzes vor dem Auftreten des Synchronisations-Datensignals des folgenden Zeitschlitzes unberührt lässt. Diese strukturelle bzw. zeitliche Zweiteilung des Zeitschlitzes trägt dem Umstand Rechnung, dass Bestätigungsdaten oft nur eine kurze Übertragungszeit in Anspruch nehmen und daher der verbleibende, nämlich zweite Teil (z.B. die zweite Hälfte oder das zweite und dritte Drittel) des betreffenden Zeitschlitzes für einen weiteren Datenverkehr ungehindert zur Verfügung steht.

Ganz allgemein sein an dieser Stelle festgehalten, dass die Dauer des jeweiligen Teiles des Zeitschlitzes nicht durch einen fix eingestellten Wert definiert sein muss, sondern sich auf dynamische Weise aus der jeweiligen Konfiguration bzw. Nutzung des Zeitschlitzes ergeben kann.

In einem System, in dem z.B. während eines Zeitschlitzzyklus von 15 Sekunden 256 Zeitschlitze zu je 58,6 Millisekunden existieren, lassen sich problemlos 2 bis 5 Funk-Tags pro Zeitschlitz individuell adressieren und individuelle Aufgaben mit einem Einfach-Zeitschlitzbefehl an sie delegieren. Werden also mehrere Funk-Tags pro Zeitschlitz mit einem Auftrag belegt und wird folglich erwartet, dass sich alle diese Funk-Tags im vorliegenden Zeitschlitz mit besagten Bestätigungsdaten melden, so ist es von Vorteil, wenn jeder Funk-Tag einem Ordnungsprinzip folgt. Zu diesem Zweck ist der Funk-Tag dazu ausgebildet, neben seiner eigenen Adresse, wenn mit Hilfe der Adressdaten mehrere Funk-Tags adressiert sind, auch jene des oder der anderen adressierten Funk-Tags auszuwerten und seine Bestätigungsdaten innerhalb eines für die Abgabe der Bestätigungsdaten vorgesehenen Zeitfensters zu jenem Zeitpunkt abzugeben, welcher der durch die festgestellten Adressen für ihn ermittelten Reihenfolge in der Gruppe der adressierten Funk-Tags entspricht. Da die Kommunikationsstation als Auftraggeber der Aufgaben Kenntnis von den adressierten Funk-Tags hat, ist für die Übermittlung der Bestätigungsdaten nur ein minimaler Datenverkehr nötig, da die Kommunikationsstation unter Einhaltung des Ordnungsprinzips genau weiß, in welcher Reihenfolge und folglich auch zu welchem Zeitpunkt oder während welcher Zeitdauer welcher der involvierten Funk-Tags seine Bestätigungsdaten übermittelt.

Um auch größere Datenmengen zwischen der Kommunikationsstation und einem Funk-Tag zu übermitteln, für deren Übertragung die Dauer eines Zeitschlitzes nicht ausreichen würde, ist der Funk-Tag zum Ausführen eines Befehls als Mehrfach-Zeitschlitzbefehl über mehrere Zeitschlitze hinweg ausgebildet ist. Die Verarbeitung solcher Befehle kann in aneinander angrenzenden Zeitschlitzen oder in nicht unmittelbar benachbarten Zeitschlitzen erfolgen. So kann z.B. ein Bestandteil des Befehls die Anzahl der zu verwendenden Zeitschlitze oder auch die Identifikation der zu verwendenden Zeitschlitze oder auch Zeitschlitzgruppen sein. Die verwendeten Zeitschlitze können sich auf einen Zeitschlitzzyklus beschränken oder übergreifend über mehrere Zeitschlitzzyklen lokalisiert sein. Solche Mehrfach-Zeitschlitzbefehle können aus der Sicht des Funk-Tags z.B. den Download einer größeren Datenmenge von der Kommunikationsstation aber auch einen Upload solcher Datenmengen hin zu der Kommunikationsstation betreffen. Analog zum Einfach-Zeitschlitzbefehl werden auch durch den Mehrfach-Zeitschlitzbefehl keine Daten zur Verarbeitung (z.B. Daten, die der Anzeige mit Hilfe eines Displays dienen usw.) durch den Funk-Tag an den Funk-Tag übertragen, sondern nur Befehle, die ggf. zu einer internen Verarbeitung von Daten führen und / oder den Funk-Tag zu einem späteren Zeitpunkt zum Empfang von Daten bzw. zur Sendung von Daten veranlassen. Nach dem Empfang des Mehrfach-Zeitschlitzbefehls kann der Funk-Tag wieder in seinen energiesparenden Schlaf-Zustand wechseln, um daraufhin autonom zeitgesteuert zu jenem Zeitpunkt in den Aktiv-Zustand zu wechseln, zu dem die Datenübertragung an ihn durchgeführt wird. Im Rahmen der Datenübertragung ist nun keine neuerlich Befehlskommunikation, insbesondere auch keine neuerliche Adressierung des Funk-Tags nötig, da die Kommunikationsstation ja bereits vorab durch Übermittlung des Mehrfach-Zeitschlitzbefehls die Systematik der Datenübertragung hin zu dem Funk-Tag definierte. Bei einem Funk-Tag mit z.B. einem Display ist demnach der Zeitpunkt der Adressierung des Funk-Tags zum Empfangen von anzuzeigenden Daten von dem tatsächlichen Zeitpunkt der Übertragung der anzuzeigenden Daten vollständig zeitlich entkoppelt. Die Übertragung von anzuzeigenden Daten kann im aktuellen oder einem anderen Zeitschlitz zu einem Zeitpunkt gestartet werden. Die Übertragung der anzuzeigenden Daten kann sich über unterschiedliche Zeitschlitzen eines Zeitschlitzzyklus erstrecken oder auch über mehrere Zeitschlitzzyklen erstrecken.

Betrifft der Mehrfach-Zeitschlitzbefehl eine Datenübertragung von der Kommunikationsstation zu dem Funk-Tag, ist es von Vorteil, wenn die Kommunikationsstation zum Übertragen der Gesamtdaten aufgeteilt auf mehrere Zeitschlitze ausgebildet ist, wobei pro Zeitschlitz ein oder mehrere Datenpaket als Teil der Gesamtdaten übertragen wird und von dem jeweiligen Zeitschlitz ein an einen ersten Teil des Zeitschlitzes angrenzender zweiter Teil des Zeitschlitzes zur Datenübertragung genützt wird. Im Vorliegenden Fall wird in Analogie zu den Erörterungen zum Einfach-Zeitschlitzbefehl nur der zweite Teil (z.B. die zweite Hälfte) des Zeitschlitzes genutzt, um den andern, nämlich ersten Teil des Zeitschlitzes für andere Aktivitäten unberührt zu lassen. Gleiches gilt mutatis mutandis auch für eine Datenübertragung von dem Funk-Tag an die Kommunikationsstation.

Um dem Kommunikationspartner anzuzeigen, dass in einer Serie von Zeitschlitzen, die zur Verarbeitung des Mehrfach-Zeitschlitzbefehls nötig sind, in dem jeweiligen Zeitschlitz eine Bearbeitung einer Teilaufgabe erfolgt, ist es von Vorteil, wenn der Funk-Tag zum Generieren und zum Abgeben von Teil-Bestätigungsdaten in jedem Zeitschlitz, in dem der Mehrfach-Zeitschlitzbefehl ausgeführt wird, ausgebildet ist.

In einer besonders bevorzugten Ausbildung des System ist der Funk-Tag zum Abgeben der Teil-Bestätigungsdaten in besagtem zweiten Teil anschließend an das empfangene Datenpaket und vor dem Ende des jeweiligen Zeitschlitzes ausgebildet. Damit ist der gesamte durch den Mehrfach-Zeitschlitzbefehl bedingte Datenverkehr in dem zweiten Teil des Zeitschlitzes zusammengefasst.

Entsprechend der Ausbildung der im System involvierten Funk-Tags ist auch die Kommunikationsstation zum Empfangen und Verarbeiten der Bestätigungsdaten in einem dafür vorgesehenen Empfangszeitfenster ausgebildet. Es werden also Bestätigungsdaten zum Einfach-Zeitschlitzbefehl in dem zum ersten Teil des jeweiligen Zeitschlitzes korrespondierenden Empfangsfenster empfangen und Bestätigungsdaten zum Mehrfach-Zeitschlitzbefehl in dem zum zweiten Teil des jeweiligen Zeitschlitzes korrespondierenden Empfangsfenster empfangen.

In einer bevorzugten Ausbildung des System sind die zuvor beschriebenen Möglichkeiten der Verarbeitung von Befehlen kombiniert, folglich ist die Kommunikationsstation dazu ausgebildet, für einen Zeitschlitz, der für die Abarbeitung eines Mehrfach-Zeitschlitzbefehl durch einen erster Funk-Tag vorgesehen ist, einen zweiten Funk-Tag mit Hilfe der Adressdaten zu adressieren und einen Einfach-Zeitschlitzbefehl mit Hilfe der Befehlsdaten an den zweiten Funk-Tag zu übermitteln. Dies gestattet neben einer Übertragung von größeren Datenmengen zwischen der Kommunikationsstation und dem ersten Funk-Tag auch eine Beauftragung eines zweiten Funk-Tags mit Aktivitäten bzw. Aufgaben, die nur ein geringes Datenaufkommen im Funkverkehr mit der Kommunikationseinrichtung verursachen. Dabei wird die Datenübertragung mit dem jeweiligen Funk-Tag in unterschiedlichen Teilen des betreffenden Zeitschlitzes abgewickelt.

Gemäß einem weiteren Aspekt des Systems ist die Kommunikationsstation dazu ausgebildet, einen Funk-Tag in dem für ihn bestimmten Zeitschlitz mit Hilfe eines Befehls über einen weiteren Aufwachzeitpunkt zu instruieren, der nicht zu einem für ihn üblicherweise bestimmten Zeitschlitz korrespondiert, sodass der Funk-Tag in einem anderen als seinem im Zeitschlitzkommunikationsverfahren üblichen Zeitschlitz für eine Datenübertragung mit der Kommunikationsstation zur Verfügung steht. Komplementär dazu ist auch der Funk-Tag dazu ausgebildet diesen Befehl zu verarbeiten und zu dem durch die Kommunikationsstation aufgezwungenen Aufwachzeitpunkt in den Aktiv-Zustand zu wechseln. Diese Maßnahme ist von Bedeutung, wenn die Kommunikation mit einem bestimmten Funk-Tag von der Kommunikationsstation aus mit hoher (höchster) Priorität forciert wird. Der betroffene Funk-Tag synchronisiert sich nun mit Hilfe des Zeitschlitzsymbols, das einen Zeitschlitz kennzeichnet, der üblicherweise nicht für ihn bestimmt ist. Nach Bearbeitung des in diesem unüblichen Zeitschlitz erhaltenen Auftrags orientiert sich der betroffene Funk-Tag wieder an seinem für ihn üblichen Zeitschlitz und ist, nachdem er sich wieder synchronisiert hat, in dem synchronen Zustand zur Kommunikation mit der Kommunikationsstation bereit.

Um eine selbständige Suche nach einer Kommunikationsstation zu ermöglichen, ist der Funk-Tag dazu ausgebildet, für eine Zeitspanne entsprechend der Dauer des Zeitschlitzzyklus, insbesondere verlängert um einen Teil besagter Dauer, mehrfach zu prüfen, ob ein Synchronisations-Datensignal empfangbar ist, und bei Ausbleiben des Synchronisations-Datensignals den Funk-Kanal zu wechseln und die Empfangsprüfung neuerlich durchzuführen. Da jede Kommunikationsstation einen anderen Funk-Kanal belegt, ergibt sich für einen suchenden Tag in Ermangelung der Existenz eines Synchronisations-Datensignals die Konsequenz, dass entweder für den betreffenden Funk-Kanal keine Kommunikationsstation existiert oder eine solche Kommunikationsstation außerhalb seiner Reichweite ist und folglich eine andere Kommunikationsstation zu suchen ist. Dieser Vorgang kann solange fortgesetzt werden, bis eine Möglichkeit der Kommunikation mit einer Kommunikationsstation gefunden wurde und Funk-Tag dort registriert wurde und dann im System zur Verfügung steht.

Diese Suche nach einer Kommunikationsstation kann vereinfacht werden, indem der Funk-Tag dazu ausgebildet ist, eine Suche nach einem Synchronisations-Datensignal auf eine Gruppe von vorbestimmten Funk-Kanälen zu beschränken, insbesondere jene Funk-Kanäle, die vorab von einer Kommunikationsstation übermittelt wurde, als der Funk-Tag mit dieser Kommunikationsstation in Verbindung stand. Diese Maßnahme ist für einen neu ins System zu integrierenden Funk-Tag sinnvoll, jedoch besonders bevorzugt für einen bereist integrierten Funk-Tag, der bewegt wurde und als Folge der Bewegung die kommunikative Verbindung mit seiner Kommunikationsstation abriss. Die Beschränkung auf bekannte Funk-Kanäle stellt eine energiesparende Methode dar und hilft zudem Kollisionen mit Funk-Kanälen zu vermeiden, die vorwiegend von anderen Geräten, wie z.B. einem konventionellen WLAN (Wireless Local Area Network, drahtloses lokales Netzwerk) belegt sind.

Um eine möglichst einfache und automatische Installation einer neuen Kommunikationsstation in einem bestehenden System durchzuführen ist es von Vorteil, wenn die Kommunikationsstation dazu ausgebildet ist, bei ihrer Inbetriebnahme alle zur Verfügung stehenden, insbesondere für ihren Betrieb vorprogrammierten Funk-Kanäle zu prüfen, ob der jeweilige Funk-Kanal durch eine andere Kommunikationsstation benützt wird oder der betreffende Funk-Kanal unbenützt ist, und bei Vorliegen eines solchen unbenützten Funk-Kanals diesen Funk-Kanal für die Kommunikation mit ihr zugeordneten bzw. ihr zuzuordnenden Funk-Tags zu benützen. Ein bereits belegter Funk-Kanal wird daran erkannt, dass das Synchronisations-Datensignal einer anderen Kommunikationseinrichtung im Funk-Kanal auftritt.

Ein erfindungsgemäßes System kann eine Mehrzahl an Kommunikationsstationen aufweisen, die z.B. räumlich an verschiedenen Orten lokalisiert sind, und jeder Kommunikationsstation kann eine Gruppe von Funk-Tags durch Wahl des der Kommunikationsstation zugeordneten Funk-Kanals zugewiesen sein. Somit lassen sich auf einfache und robuste Weise Gruppen von Funk-Tags in dem System verwalten, wobei für jede Gruppe von Funk-Tags das selbe Zeitschlitzkommunikationsverfahren zur Anwendung kommt, jedoch in von Gruppe zu Gruppe unterschiedlichen Kanälen.

Gemäß einer bevorzugten Ausbildung des Systems weist der Funk-Tag eine Anzeigeeinheit zum Wiedergeben eines Bilds auf, wobei das Bild in Bildebenen strukturiert ist und jede Bildebene durch Bild-Ebene-Daten repräsentiert ist, wobei der Funk-Tag zum individuellen Empfangen der Bild-Ebene-Daten und zum Zusammenstellen des Bildes durch Überlagerung der Bildebenen ausgebildet ist, und wobei die Kommunikationsstation zum Übertragen der jeweiligen Bild-Ebene-Daten in einer zeitschlitzübergreifenden Kommunikation mit dem Funk-Tag ausgebildet ist. Mit dieser Maßnahme geht der Vorteil einher, dass nur selektiv jene Bildebene von der Kommunikationsstation zu einem Funk-Tag zu übertragen ist, in der sich Änderungen ergeben. Diese Maßnahme stellt einen erheblichen Beitrag zur System- und Energieeffizienz dar, weil die zu übertragende Datenmenge relativ klein gegenüber der Datenmenge ist, die für den gesamten Bildinhalt zu übertragen wäre. Zudem kann die Komprimierung der Bilddaten jeder zu übertragenden Bildebene optimiert werden, die zu übertragende Datenmenge folglich minimiert werden. Dies ist deshalb möglich, weil in einer zu übertragenden Bildebene üblicherweise große "weiße" bzw. "transparente" Bereiche vorliegen, für welche eine sehr hohe Komprimierungsrate erzielt wird. Da folglich die zu übertragende Datenmenge auf das absolute Minimum reduziert wird, um ein Update eines Bildes durchzuführen, wirkt sich diese Maßnahme äußerst Vorteilhaft auf die Lebensdauer der Funk-Tags aus, weil ihr Energiebedarf bzw. -verbrauch durch möglichst wenig Aktivität niedrig gehalten wird.

In diesem Kontext kann der Funk-Tag zum Verändern eines bestehenden Bildes durch ein Empfangen von mindestens einer einzigen neuen Bildebene des Bildes und ein Erzeugen des neuen Aussehens des Bildes durch ein Austauschen einer bereist existierenden Bildebene des Bildes durch die soeben empfangene Bildebene ausgebildet sein. Hierbei können die vorangehend erörterten Befehle zur Anwendung kommen. So kann z.B. der Download der Bilddaten einer Bildebene von der Kommunikationsstation hin zu dem Funk-Tag mit Hilfe eines Mehrfach-Zeitschlitzbefehls abgearbeitet werden, bei dem die Bilddaten der betroffenen Bildebene in einer neuen Speicherseite im Funk-Tag gespeichert werden. Sobald der Download abgeschlossen ist, kann mit einem Einfach-Zeitschlitzbefehl von einer anderen, zuvor zur Herstellung der besagten Bildebene des Bildes benützten Speicherseite auf die neue Speicherseite umgeschaltet werden, um die besagte Bildebene zum Zusammensetzen des Bildes mit seinen anderen Bildebenen zu verwenden.

Gemäß einem bevorzugten Ausführungsbeispiel ist der Funk-Tag zum Verarbeiten von Bildern ausgebildet ist, bei denen den Bildebenen folgende Bedeutungen zukommen, nämlich: erste oder zweite Häufigkeit der Veränderung von Bildinhalten; erste oder zweite Farbe von Bildinhalten; erste oder zweite Informationskategorie von Bildinhalten. Somit lassen sich an den jeweiligen Einsatzbereich des Systems angepasste Implementierungen realisieren, wobei auch Kombinationen der Bedeutungen der Ebenen möglich sind. Auch sind mehr als zwei Bildebenen, z.B. drei, vier oder fünf Bildebenen möglich.

Gemäß einem solchen bevorzugten Ausführungsbeispiel realisiert das System ein elektronisches Preisanzeigesystem und eine Anzeigeeinheit des Funk-Tags dient zur Anzeige von Produkt- bzw. Preis-Information usw..

In allen Fällen, in denen eine Anzeigeeinheit zum Einsatz kommt, kann die Anzeigeeinheit z.B. mit Hilfe von LCD-Technologie, bevorzugt jedoch auch Elektronic-Ink-Technologie (auch E-Ink als Synonym für elektronisches Papier genannt) realisiert sein.

Gemäß einem weiteren Aspekt des System ist der Funk-Tag dazu ausgebildet, den Wechsel vom Schlaf-Zustand in den Aktiv-Zustand zu einem Aufwachzeitpunkt mit einer Vorlaufzeitdauer vor dem Auftreten des Synchronisations-Datensignals durchzuführen. Diese Maßnahme stellt sicher, dass der Funk-Tag als ganzes oder anders formuliert alle seine zum Empfangen und Verarbeiten des Synchronisations-Datensignals nötigen Komponenten voll betriebsfähig sind und folglich ein teilweises Empfangen des Synchronisations-Datensignals, das dann mit hoher Wahrscheinlichkeit nicht sinnvoll auswertbar ist, vermieden wird.

Dabei kann die Dauer der Vorlaufzeit so gewählt werden, dass sie einen ersten Bruchteil der Zeitschlitzdauer eines Zeitschlitzes beträgt. Sie kann z.B. zwischen 0,1% und 10% der Dauer des Zeitschlitzes betragen.

Gemäß einem weiteren Aspekt des Systems ist der Funk-Tag dazu ausgebildet, den Aktiv-Zustand während einer Empfangszeitdauer einzunehmen, die Länger als eine Sendezeitdauer des Synchronisations-Datensignals ist. Mit dieser Maßnahme geht der Vorteil einher, dass sichergestellt wird, dass das gesamte Synchronisations-Datensignal zuverlässig empfangbar ist. Die aktuelle zu benutzende Empfangszeitdauer kann für alle Empfangsvorgänge im synchronen Zustand fix eingestellt sein. Es kann jedoch auch die Dauer des Aktiv-Zustands auf Grundlage der mit Hilfe des Auftretens des Synchronisations-Datensignals festgestellten Drift der Zeitbasis des Funk-Tags dynamisch an die jeweilige Drift angepasst werden, ggf. inklusive der zuvor erwähnten Vorlaufzeit. Die Empfangszeitdauer kann auch durch Detektion des Verschwinden des Synchronisations-Datensignals begrenzt sein.

Um optimale Empfangsbedingungen zu gewährleisten, kann bei einem solchen System der Funk-Tag auch dazu ausgebildet sein, den zum Empfangen des Synchronisations-Datensignals eingenommenen Aktiv-Zustand mit einer Nachlaufzeit nach dem Empfangen des Synchronisations-Datensignals beizubehalten. Die Nachlaufzeit kann z.B. durch die vordefinierte Dauer des Aktiv-Zustands definierte sein oder den aktuellen Drift- bzw. Empfangszuständen entsprechend ggf. sogar dynamisch angepasst werden.

Dabei kann die Dauer der Nachlaufzeit so gewählt werden, dass die Nachlaufzeit einen zweiten Bruchteil der Dauer eines Zeitschlitzes beträgt. Sie kann z.B. zwischen 0,1% und 10% der Dauer des Zeitschlitzes betragen. Es kann die Dauer der Nachlaufzeit identisch zu der Dauer der Vorlaufzeit sein oder auch von dieser verschieden sein.

Als besonders vorteilhaft hat es sich erwiesen, dass die Kommunikationsstation zum Aussenden des Synchronisations-Datensignals am Beginn des jeweiligen Zeitschlitzes ausgebildet ist. Diese Maßnahme stellt sicher, dass der Beginn eines Zeitschlitzes für den Funk-Tag sehr präzise identifizierbar ist, die Kompensation der Drift der internen Zeitbasis des Funk-Tags bereits zu Beginn des Zeitschlitzes erfolgen kann und folglich alle weiteren Aktivitäten des Funk-Tags innerhalb des jeweiligen Zeitschlitzes mit bestmöglichem Synchronismus zu der Zeitbasis der Kommunikationsstation ablaufen können und die volle verbleibende Länge des Zeitschlitzes für besagte weitere Aktivitäten zur Verfügung steht.

Im Hinblick auf ein möglichst strukturierte und doch flexible Weise der Kommunikation zwischen der Kommunikationsstation und einem Funk-Tag hat es sich als vorteilhaft erweisen, wenn die Kommunikationsstation zum Einbetten von Bestätigungszeitdaten in das Synchronisations-Datensignal ausgebildet ist, mit deren Hilfe ein Bestätigungszeitpunkt innerhalb des Zeitschlitzes festlegbar ist, zu dem Bestätigungsdaten von dem Funk-Tag erwartet werden, und der Funk-Tag zum Abgeben der Bestätigungsdaten zu dem angegebenen Zeitpunkt ausgebildet ist. Dies ist insbesondere dann von Vorteil, wenn in einem Zeitschlitz mehrere Funk-Tags adressiert wurden und für alle ein individueller Bestätigungszeitpunkt kommuniziert wird. Jeder der Funk-Tags kann dann z.B. nach dem Empfang des Synchronisations-Datensignals einen Befehl ausführen, in den energiesparenden Schlaf-Zustand wechseln und erst zu dem für ihn individuell festgelegten Bestätigungszeitpunkts wieder in den Aktiv-Zustand wechseln und seine Bestätigungsdaten aussenden, um danach möglichst zügig wieder in den Schlaf-Zustand wechseln. Die bereits im Synchronisations-Datensignal erfolgte Festlegung des Bestätigungszeitpunkts stellt somit eine die Energieeffizienz des Funk-Tags verbessernde Maßnahme sowie eine Maßnahme zur Vermeidung von Kollisionen dar und wirkt sich somit nachhaltig auf seine Lebenszeit aus. Die Bestätigungszeitdaten können einen absoluten Zeitpunkt im Zeitschlitz gemessen von seinem Start angeben oder eine Verweildauer im Schlaf-Zustand z.B. bezogen auf ein vorangehendes Ereignis, wie z.B. das Ende des Synchronisation-Datensignals, das bei dem Funk-Tag erkennbar ist, oder das Ende des Aktiv-Zustands.

Ein weiterer Aspekt der Erfindung betrifft die Zuordnung einer Mehrzahl der Funk-Tags zu einer Mehrzahl von Kommunikationsstationen. Um eine möglichst balancierte Verteilung von Zuordnungen zwischen den Funk-Tags und den Kommunikationsstationen zu erhalten, hat es sich als vorteilhaft erwiesen, wenn eine Datenverarbeitungseinrichtung, z.B. ein Server, zum Entscheiden darüber ausgebildet ist, welcher der Funk-Tags sich zu welcher Kommunikationsstation verbinden darf. Die Grundlage für diese Entscheidung kann eine bereits bestehende Verteilung von Verbindungen im System sein, die unter dem Gesichtspunkt von neu hinzukommenden Funk-Tags zu optimieren ist. Es kann aber auch ein fix vorgegebenes Verbindungsschema vorliegen, das vorab definiert wurde und zu realisieren ist.

Um ein möglichst dynamisches System zu ermöglichen, kann es von Vorteil sein, wenn eine Datenverarbeitungseinrichtung, z.B. eine Server, dazu ausgebildet ist, einen Funk-Tag dazu zu veranlassen, eine bestehende Verbindung mit einer der Kommunikationsstationen zu beenden und eine Verbindung mit einer anderen Kommunikationsstation einzugehen. Der Server kann dann auf eine nicht balancierte Verteilung der Funk-Tags reagieren und zur Realisierung einer optimalen Lastverteilung (load balancing) die Zuordnung von Funk-Tags zu Kommunikationsstationen pro-aktiv beeinflussen und ändern.

Diese und weitere Aspekte der Erfindung ergeben sich durch die nachfolgend erörterten Figuren.

### FIGURENKURZBESCHREIBUNG

Die Erfindung wird im Folgenden unter Hinweis auf die beigefügten Figuren anhand von Ausführungsbeispielen noch einmal näher erläutert, auf welche die Erfindung jedoch nicht beschränkt ist. Dabei sind in den verschiedenen Figuren gleiche Komponenten mit identischen Bezugszeichen versehen. Es zeigen auf schematische Weise:
- Fig. 1: ein erfindungsgemäßes System;
- Fig. 2: eine Verteilung von Funk-Kanäle für das System;
- Fig. 3: ein Blockschaltbild eines elektronischen Preisanzeigeschilds;
- Fig. 4: eine Assemblierung eines Bildes;
- Fig. 5: ein erstes Zustandsdiagramm;
- Fig. 6A: ein zweites Zustandsdiagramm;
- Fig. 6B: eine erste Datenstruktur;
- Fig. 7A: ein zweites Zustandsdiagramm;
- Fig. 7B: eine zweite Datenstruktur;
- Fig. 8: ein drittes Zustandsdiagramm;
- Fig. 8B-8C: eine dritte und eine vierte Datenstruktur.

### BESCHREIBUNG DER AUSFÜHRUNGSBEISPIELE

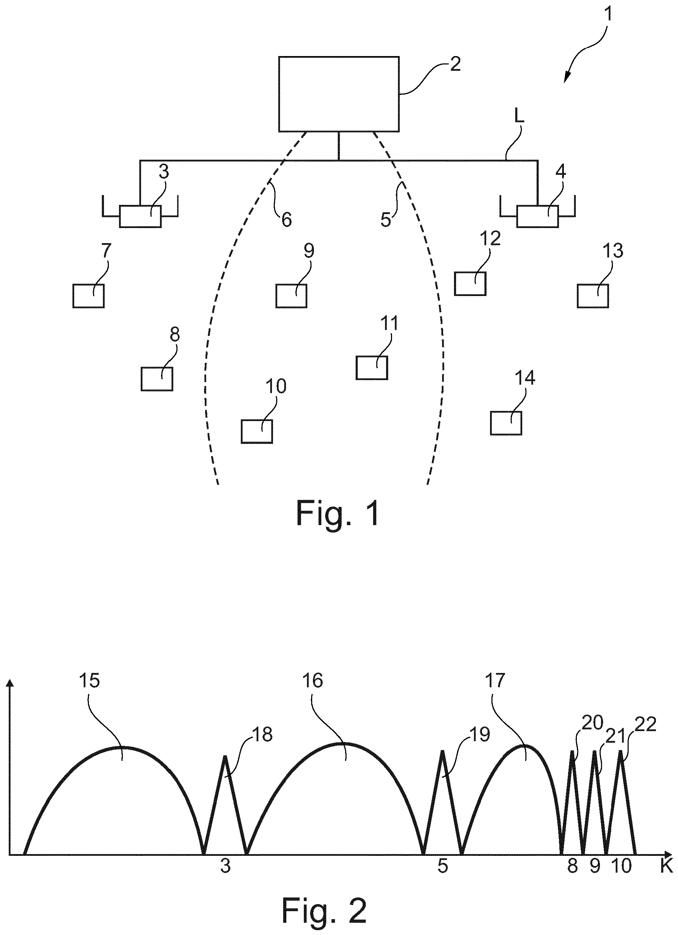

In der Figur 1 ist als ein erfindungsgemäßes System 1 zum Kommunizieren gemäß einem Zeitschlitzkommunikationsverfahren ein elektronisches Preisanzeigesystem dargestellte, das in den Räumlichkeiten eines Einzelhandelsunternehmens installiert ist. Aus Gründen der Übersichtlichkeit wurde in den Figuren auf eine Darstellung der Räumlichkeiten und ihrer Einrichtung verzichtet. Das System 1 weist einen Server 2, eine erste und eine zweite Kommunikationsstation 3 und 4 (nachfolgend kurz Station genannt), sowie eine Anzahl von acht Funk-Tags 7 - 14 (nachfolgend kurz ESL für Electronic Shelf Label genannt) auf. Der Server ist in Büroräumlichkeiten untergebracht und über eine kabelgebundene Kommunikationsleitung (LAN) L mit den Stationen 3 und 4 verbunden. Die Stationen 3 und 4 stehen über Funksignale mit den ESL 7-14 in Kontakt. Die Stationen 3 und 4 sind in einem Verkaufsraum an unterschiedlichen Positionen an der Decke angebracht. Die ESL 7 - 14 sind an Regalen korrespondierend zu Produkten angebracht, zu denen mit Hilfe der ESL 7 - 14 Preis und Produktinformationen angezeigt werden. Die Produktinformationen werden von dem Server 2 an die Stationen 3, 4 übertragen und von dort individuell an die einzelnen ESL 7 - 14 kommuniziert.

Jede Station 3, 4 deckt einen Funkbereich ab, wobei eine erste Funkbereichsgrenze 5 der Station 3 und eine zweite Funkbereichsgrenze 6 der Station 4 bereichsweise angedeutet ist. Die Funkbereiche weisen einen Überlappungsbereich auf, in dem die ESL 9 - 11 angeordnete sind.

Bei der Inbetriebnahme des Systems 1 wurden zunächst die Stationen 3 , 4 nacheinander gestartet. Jede Station 3 bzw. 4 kennt die für den Betreib des Systems 1 bevorzugten Funk-Kanäle mit den Kanalnummer 3, 5, 8, 9 und 10. Dies ist in der Figur 2 dargestellt, in der verschiedene Frequenzbänder 15 - 22 über Kanalnummern K dargestellt wind. Für einen Betrieb eines konventionellen WLANs stehen die Frequenzbänder 15, 16 und 17 zur Verfügung. Die für den Betrieb des Systems 1 bevorzugten Frequenzbänder 18, 19, 20 - 22 korrespondieren zu Kanalnummern 3, 5, 8 - 10 und überlappen nicht mit den WLAN Frequenzbändern 15 - 17. Die Station 3 selektierte automatisch den Funk-Kanal mit der Kanalnummer 3, weil dieser als erster geprüft wurde, ob er bereits von einer anderen Station okkupiert ist. Die Station 4 selektierte automatisch den Funk-Kanal mit der Kanalnummer 5, weil sie bei ihrer Prüfung auf freie Funk-Kanäle feststellte, dass der Funk-Kanal mit der Kanalnummer 3 bereits belegt ist und als nächster freier Funk-Kanal jener mit der Kanalnummer 5 identifiziert wurde. Die Zuordnung der Funk-Kanäle kann jedoch auch fix sein.

Sobald die ESL 7 - 14 in den jeweiligen Funkbereich der Station 3 bzw. 4 eingebracht sind, stellen sie fest, dass in einem oder in mehreren Funk-Kanälen Funksignale der zutreffenden Stationen 3 bzw. 4 existieren. Die ESL 7 und 8 stellen eine Verbindung zur ersten Station 3 her. Die ESL 12 - 14 stellen eine Verbindung zur zweiten Station 4 her. Bei den ESL 9 - 11 wird festgestellt, dass für sie alle beide Stationen 3 und 4 zur Verfügung stehen. Jedes ESL 9 - 10 prüft nun die Empfangsqualität der von der jeweiligen Station 3, 4 empfangenen Funksignale und entschiedet sich für jene Station 3 oder 4, für welche die beste Empfangsqualität festgestellt wurde, um mit ihr eine Verbindung in dem jeweiligen Funk-Kanal (Kanalnummer 3 oder 5) herzustellen. Dieser Vorgang der Entscheidungsfindung kann jedoch auch von den Stationen 3 und 4 durchgeführt werden, wobei die Stationen die jeweilige Empfangsqualität einer Kommunikation mit den ESL 9 - 11 prüfen und sich untereinander darüber verständigen, welche von ihnen mit welchem der ESL 9 - 11 eine Verbindung eingeht, weil für den jeweiligen ESL 9 - 11 günstigere Kommunikationsverhältnisse vorliegen. Die Entscheidungsfindung der Zuordnung zwischen des ESL 9 - 11 und den Stationen 3, 4 kann jedoch auch an den Server 2 ausgelagert werden, da dieser mit den Stationen 3, 4 in Kontakt steht. Im Rahmen des Verbindungsaufbaus zwischen den jeweiligen ESL 7 - 14 werden also zunächst Funk-Kanäle gewählt (auch als "channel scan" bezeichnet), ggf. eine Bewertung der Empfangsqualität auf dem jeweiligen Funk-Kanal durchgeführt und danach eindeutige Hardware-Adressen der ESL 7 -14 an die zur Kommunikation selektierte Station 3, 4 übergeben. Somit kennt jede Station 3, 4 die ihr jeweils zugeordneten ESL 7 - 14. Diese erste Zuordnung zwischen Station 3, 4 und ESL 7 - 14 wird an den Server 2 übergeben.

In weitere Folge wird eine zweite Zuordnung zwischen jedem ESL 7 - 14 und genau einem Produkt hergestellt. Der Server erlangt letztendlich Kenntnis darüber, wo im Verkaufsraum, an welchem Regal und an welcher Regalposition sich das jeweilige ESL 7 - 14 befindet (oder befinden sollte), weil er auch die entsprechende Position der Produkte kennt, die mit Hilfe eines Planogramms repräsentiert ist.

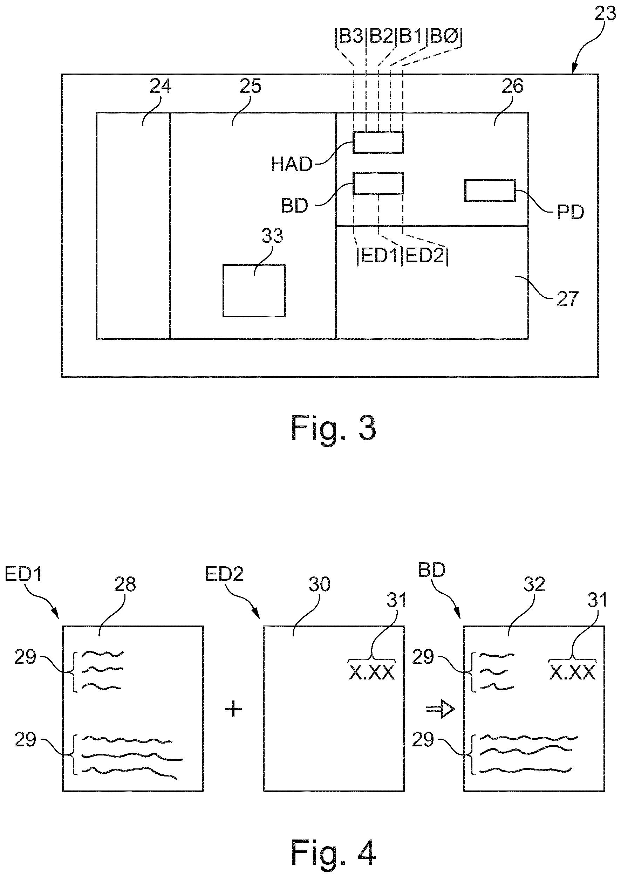

In der Figur 3 ist ein Blockschaltbild des ESL 7 stellvertretend für die im System benutzen ESL 7 - 14 dargestellt, die alle identisch aufgebaut sind. Das ESL 7 weist ein Funkmodul 24, einen Prozessor 25 zum Verarbeiten von Daten, zum Steuern von Betriebs-Zuständen und zum Bereitstellen von Funktionen, einen Speicher 26 zum Speichern von Daten und Programmen, sowie eine Anzeige 27 realisiert in energiesparender Electronic-Ink-Technology zur Anzeige der Produktinformationen auf. Das Funkmodul 24 dient zum funkbasierten Kommunizieren mit den Stationen 3 bzw. 4, wobei aus empfangenen Funksignalen Empfangsdaten generiert werden und an den Prozessor 25 übergeben werden oder von dem Prozessor 25 übergebene Sendedaten in Funksignale umgesetzt werden. Die in dem Speicher 26 gespeicherten Daten können sowohl dem Prozessor 25 als auch der Anzeige 27 zugeordnet sein. Auch wird in der gewählten Darstellung nicht unterschieden, um welchen Typ von Speicher (ROM, EEPROM, RAM usw.) es sich handelt oder in welcher Weise der Speicher 26 logisch oder physikalisch dem Prozessor 25 und / oder der Anzeige 27 zugeordnet ist. In der gewählten Darstellung wurde auch auf die Darstellung von Verbindungen, wie Signal- und / oder Datenleitungen zwischen den Funktionsblöcken 24 - 27 sowie eine Darstellung des Energiespeichers (im vorliegenden Fall eine Batterie) verzichtet.

Mit Hilfe des Speichers 26 werden Bilddaten BD für die Generierung eines Bilds mit Hilfe der Anzeige 27, wobei die Bilddaten BD eine erste Bildebene des Bilds mit ersten Ebene-Daten ED1 und eine zweite Bildebene des Bilds mit zweiten Ebene-Daten ED2 angeben, Hardware-Adressdaten HAD zur Angabe der Hardware-Adresse des ESL, sowie Parameterdaten PD betreffend die Parametrisierung des Zeitschlitzkommunikationsverfahrens gespeichert. Es sei an dieser Stelle erwähnt, dass auch weitere Bildebenen vorliegen können.

Die Hardware-Adressdaten HAD umfassen vier Bytes B3, B2, B1, B0, wobei B0 das niederwertigste Byte der Hardware-Adresse ist.

Mit Hilfe des Prozessors 25 werden in dem ESL 7 die verschiedenen Ebene-Daten ED1 und ED2 zu dem gesamten Bild zusammengefügt. Sowohl die ersten als auch die zweiten Ebene-Daten ED1, ED2 repräsentieren eine Bildinformation zu jedem Bildpunkt. Es ist jedoch für beide Bildebenen eine bestimmte Bildinformation als "transparent", "Hintergrund" bzw. "Hintergrundfarbe" definierte. Daher lassen sich die einzelnen Bildebenen Bildpunkt für Bildpunkt übereinander legen, das Gesamtbild also durch Superposition der Bildinhalte zu identischen Koordinaten der Bildpunkte von verschiedenen Bildebenen aufbauen. Die Bilder liegen im Bitmap-Format vor, sie können jedoch auch in anderen Formaten wie z.B. JPG usw. vorliegen.

Dieser Bildaufbau ist in der Figur 4 schematisiert dargestellt. Eine erste Bildebenen 28 repräsentiert durch die ersten Ebene-Daten ED1 enthält im Wesentlichen statische Bildinformation 29 zu einem Produkt, wobei diese statische Bildinformation nur dann geändert wird, wenn das ESL 7 einem anderen Produkt zugeordnet wird. Die statische Bildinformation 29 betrifft z.B. beschreibenden Text zum Produkt. Alle anderen Bildbereiche sind als "transparent" definiert. Eine zweite Bildebene 30 repräsentiert durch die zweiten Ebene-Daten ED2 enthält im Wesentlichen dynamische Bildinformation 31, die sich im Vergleich zur statischen Bildinformation relativ oft ändert, wie z.B. täglich oder auch mehrmals täglich oder auch wöchentlich. Die dynamische Bildinformation 31 betrifft z.B. den Preis des Produkts oder auch Angaben zur Gültigkeit eines Angebots, wie z.B. Startdatum und Enddatum oder auch Uhrzeiten oder andere Bedingungen, die an das Angebot geknüpft sind. Alle anderen Bildbereiche sind als "transparent" definiert. Ein Gesamtbild 32 repräsentiert durch die Bilddaten BD, das durch ein Übereinanderlegen jedes Bildpunkts der ersten Bildebene 28 und eines genau dazu korrespondierenden Bildpunkts der zweiten Bildebene 30 erzeugt wurde, zeigt sowohl die statischen wie auch die dynamische Bildinformation 29, 32 und die dazwischen verbleibenden als "transparent" gekennzeichneten Bereiche.

Bei dem ESL 7 können die gesamten Bilddaten BD auf einmal in komprimierter Form empfangen werden, entkomprimiert und im Speicher 26 abgelegt werden. Dies kann z.B. bei einer erstmaligen Übertragung des Gesamtbilds geschehen. Der Vorgang ist jedoch relativ langwierig und verursacht folglich einen relativ hohen Energiebedarf. Soweit das Bild einmal im ESL 7 existiert, ist ein teilweiser Update das Bildes effizienter, weil dies energieschonender abgewickelt werden kann. Zu diesem Zweck kann das ESL 7 die jeweils zu aktualisierende Bildebene (z.B. die zweite Bildebene 30) separat von der anderen bereits im Speicher 26 abgelegten anderen Bildebene (z.B. die erste Bildebene 28 ) empfangen, entkomprimieren und im Speicher 26 ablegen. Danach wird intern auf die neu angelegte zweite Ebene-Daten ED2 zugegriffen (von einer Speicherseite auf eine andere Speicherseite umgeschaltet), um das Gesamtbild 32 neu aufzubauen.

Das ESL 7 weist auch eine Zeitsteuerstufe 33 auf, die als eigenständige Hardwarekomponente oder zumindest teilweise mit Hilfe des Prozessors 25 realisiert sein kann. Sie erzeugt eine für das ESL typische Zeitbasis und benützt diese Zeitbasis zum Steuern des Timings (Einnehmen und Verlassen) der Zustände des ESL 7. Die Steuerung des Timings erfolgt z.B. mit Hilfe von Timing-Parametern, die der Zeitsteuerstufe inhärent bekannt sind und/ oder durch den Prozessor bereitgestellt werden.

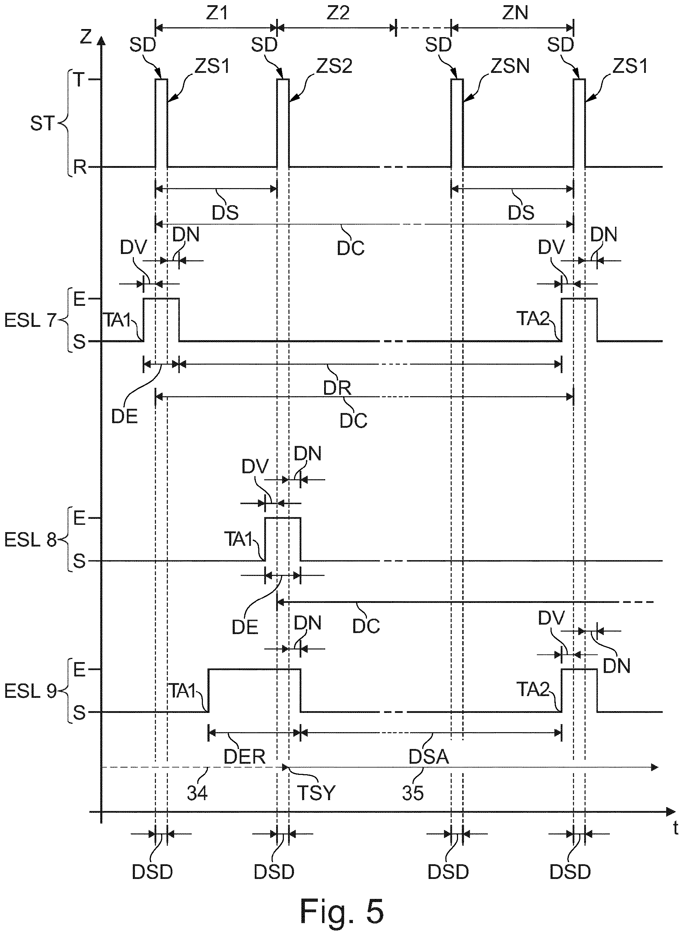

Nachfolgend wird mit Hilfe der Figuren 5 - 8 auf das bei dem System 1 zur Anwendung kommende Zeitschlitzkommunikationsverfahren eingegangen. Dabei wird nur auf die der ersten Stufe 3 zugeordneten ESL 7 - 9 eingegangen, wobei analoge Erörterungen auch auf die der zweiten Station 4 zugeordneten ESL 11 - 14 zutreffen. In den in den Figuren 5 - 8 dargestellten Zustands-Diagrammen ist auf der Abszissenachse die Zeit t eingetragen. Auf der Ordinatenachse sind zu der jeweiligen in der Erörterung berücksichtigten Komponente des Systems 1 ihre Zustände Z eingetragen. Die Diagramme zeigen folglich den zeitlichen Zustandsverlauf.

In allen Figuren 5 - 8 zeigt die oberste Zustandsfolge die Zustände der Stufe 3 gegenzeichnet durch ST. Während einer Zeitschlitzzyklus-Dauer DC (z.B. 15 Sekunden) stehen N Zeitschlitze Z1 ... ZN (z.B. 256) mit identischer Zeitschlitzdauer DS (z.B. ca. 58 Millisekunden) zur Verfügung. Während der Zeitschlitzzyklus-Dauer DC wechselt die Stufe 3 zwischen einem Sendezustand T und einem Ruhezustand R. Der Sendezustand T wird immer zu Beginn eines Zeitschlitzes Z1 ... ZN eingenommen und für eine Synchronisations-Datensignal-Dauer DSD (oder Sendezeitdauer DSD des Synchronisations-Datensignals SD) aufrecht erhalten, um mit dem jeweiligen Synchronisations-Datensignal SD das jeweilige zutreffende Zeitschlitzsymbol ZS1, ZS2, ... ZSN zu senden. Als das jeweilige Zeitschlitzzyklussymbol ZS1 ...ZSN kommt die laufende Nummer des jeweiligen Zeitschlitzes Z1 ... ZN in der Reihenfolge des Auftretens der Zeitschlitz Z1 ... ZN zum Einsatz. Folglich ist der erste Zeitschlitz Z1 in Hexadezimal-Notation (durch "Hex" gekennzeichnet) mit dem Zeitschlitzsymbol Hex 00, der zweite Zeitschlitz Z2 mit dem Zeitschlitzsymbol Hex 01 usw. und der letzte Zeitschlitz ZN (im vorliegenden Beispiel der zweihundertsechsundfünfzigste Zeitschlitz Z256 mit dem Zeitschlitzsymbol Hex FF gekennzeichnet.

Nachfolgend ist auf die Hardware-Adressen der ESL 7 - 9 eingegangen, die in Hexadezimal-Notation (höchstwertiges Byte links= viertes Byte B3: drittes Byte B2: zweites Byte B1: niederwertigstes Byte rechts = erstes Byte B0) angegeben sind. Die Hardware-Adressen der ESL 7 - 9 wären bei einem realen Betrieb des Systems 1 unveränderlich. Um jedoch mit einer überschaubaren Anzahl an ESL verschiedene Aspekte des Systems 1 zu erörtern, werden den ESL des Systems 1 von Figur zu Figur mitunter unterschiedliche Hardware-Adressen zugeordnet oder auch einzelne oder mehrere ESL nicht in die Erörterung einbezogen.

Für die Figur 5 lautet die Hardware-Adresse des ersten ESL 7 Hex B2:00:01:00, des zweiten ESL 8 Hex B2:00:01:01 und des dritte ESL 9 Hex B2:00:02:00. Das vierte ESL 10 bleibt unberücksichtigt.

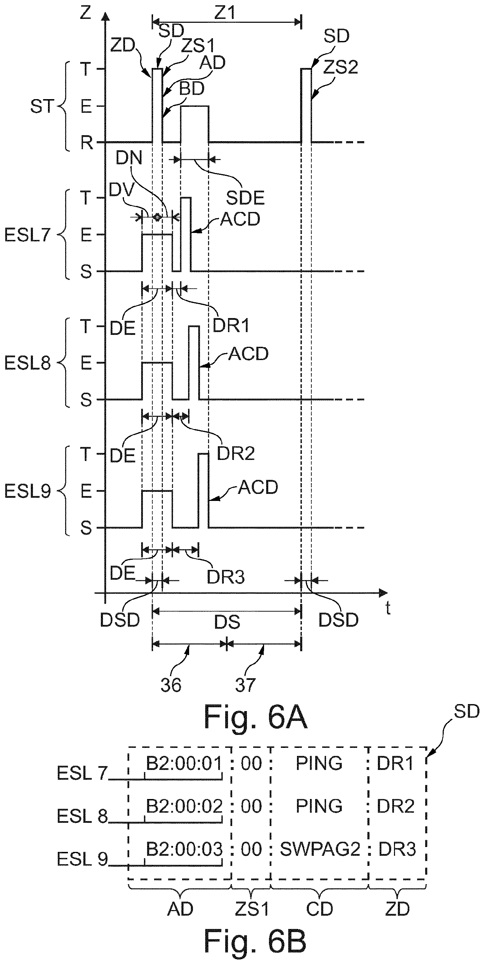

Für die Figur 6 lautet die Hardware-Adressen des ersten ESL 7 Hex B2:00:01:00, des zweiten ESL 8 Hex B2:00:02:00 und des dritten ESL 9 Hex B2:00:03:00. Das vierte ESL 10 bleibt unberücksichtigt.

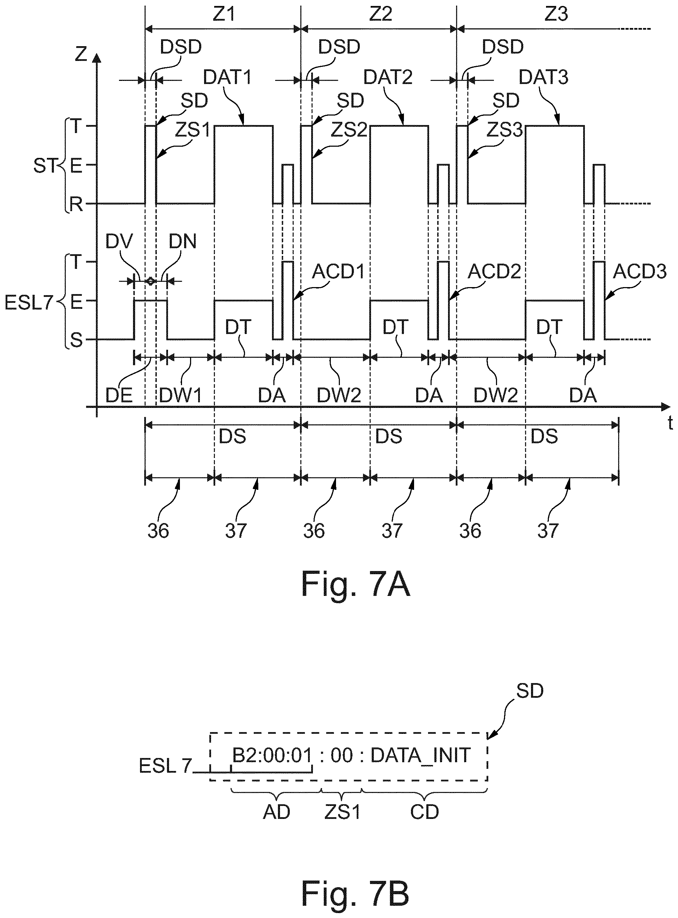

Für die Figur 7 lautet die Hardware-Adresse des ersten ESL 7 Hex B2:00:01:00. Die verbleibenden drei ESL 8 - 10 bleiben unberücksichtigt.

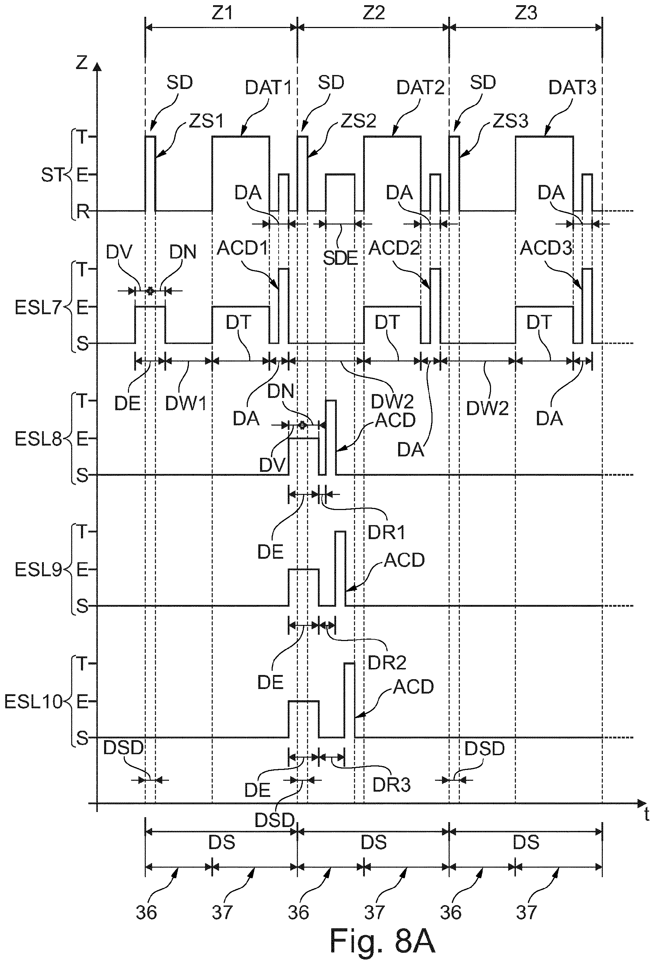

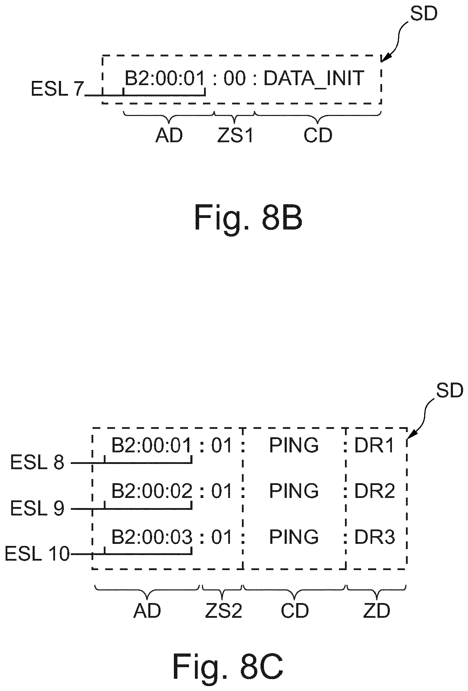

Für die Figur 8 lautet die Hardware-Adressen des ersten ESL 7 Hex B2:00:01:00, des zweiten ESL 8 Hex B2:00:01:01, der dritten ESL 9 Hex B2:00:02:01 und des vierten ESL 10 Hex B2:00:03:01.

In dem System 1 erfolgt mit Hilfe des niederwertigsten Bytes B0 bei dem jeweiligen ESL 7 - 10 eine Identifikation eines im Rahmen des Zeitschlitzkommunikationsverfahrens auftretenden Zeitschlitzes, der für das jeweilige ESL 7 - 10 bestimmt ist. Mit Ausnahme des niederwertigsten Bytes B0 werden die verbleibenden drei Bytes B1 - B3 der Hardware-Adresse verwendet, um ein ESL 7 - 10 im für das jeweilige ESL bestimmten Zeitschlitz Z1 ... ZN individuell zu adressieren.

In der Fig. 5 ist dargestellt, dass sich das erste ESL 7 im synchroneren Zustand befindet. Es erwacht zu einem ersten Aufwachzeitpunkt TA1 aus seinem Schlaf-Zustand S und wechselt mit einer relativ kurzen Vorlaufzeit DV vor einem erwarteten Auftreten eines Synchronisations-Datensignals SD in seinen empfangsbereiten Aktiv-Zustand E, empfängt das Synchronisations-Datensignal SD während einer Empfangszeitdauer DE mit dem ersten Zeitschlitzsymbol ZS1 (Hex 00), stellt durch Vergleich des niederwertigsten Bytes B0 seiner Hardware-Adresse (Hex 00) mit dem empfangenen Zeitschlitzsymbol ZS1 fest, dass der für das erste ESL 7 bestimmter erste Zeitschlitz Z1 angezeigt ist (Übereinstimmung der zu vergleichenden Bytes: B0 der Hardware-Adresse und erstes Zeitschlitzsymbol ZS1), behält die zum Steuern des Aufwachens benutzen Parameter der Zeitsteuerstufe 33 für das Aufwachen im nachfolgenden Zeitschlitzzyklus zwecks Definition des neuen Aufwachzeitpunkts bei und wechselt mit einer relativ kurzen Nachlaufzeit DN zurück in den Schlaf-Zustand S, um nach Ablauf der vorgesehen Schlaf-Zustand-Verweilzeit DR planmäßig zum neuen (zweiten) Aufwachzeitpunkt TA2 mit besagter Vorlaufzeit VD vor dem neuerlichen Beginn des ersten Zeitschlitzzyklus Z1 aufzuwachen. Gleiches gilt auf analoge Weise für das zweite ESL 8, das sich ebenso wie das erste ESL 7 im synchronen Zustand befindet.

Das dritte ESL 9 befindet sich vor einem Synchronisationszeitpunkt TSY im asynchronen Zustand, das durch den parallel zur Zeitachse laufenden Pfeil 34 mit unterbrochener Linie angedeutet ist. Es erwacht zu einem zufällig gewählten ersten Aufwachzeitpunkt TA1 und wechselt von seinem Schlaf-Zustand S in den empfangsbereiten Aktiv-Zustand E und wartet in diesem Zustand bis zum Empfangen des nächsten Auftretens des Synchronisations-Datensignals SD, wobei im vorliegenden Fall das zweite Zeitschlitzsymbol ZS2 (Hex 01) empfangen wird. Das dritte ESL 9 erkennt anhand des niederwertigsten Bytes B0 (Hex 00) seiner Hardware-Adresse, dass der für sich bestimmte Zeitschlitz in dem vorliegenden Zeitschlitzzyklus bereits der Vergangenheit angehört und folglich der nächste Zeitschlitz mit dem Zeitschlitzsymbol Hex 00 erst im nächsten Zeitschlitzzyklus zu erwarten ist, und berechnet, dass der momentan erkannte Zeitschlitz Z2 um einen Zeitschlitz neben seinem angestammten Zeitschlitz Z1 liegt, was nachfolgend als Zeitschlitzdifferenz bezeichnet wird. Im dritten ESL 9 wird die Zeitsteuerstufe 33 nun so programmiert, dass der neue Aufwachzeitpunkt TA2 wie bei einem sich im synchronen Zustand befindlichen ESL mit besagter Vorlaufzeit DV vor dem Auftreten des ersten Zeitschlitzes Z1 des nachfolgenden Zeitschlitzzyklus liegt. Die abzuwartende Verweilzeit DSA im Schlaf-Zustand S berechnet sich wie folgt: Schlaf-Zustand-Verweilzeit DR (im synchronen Zustand) abzüglich Zeitschlitzdauer DS multipliziert mit Zeitschlitzdifferenz (im vorliegenden Fall Wert 1). Somit befindet sich das dritte ESL 9 wieder im synchronen Zustand, was durch den Pfeil 35 mit durchgehender Linie angedeutet ist und wechselt von dem Aktiv-Zustand E in den Schlaf-Zustand S, um nach Ablauf der Verweilzeit DAS zum neuen Aufwachzeitpunkt TA2 wieder in seinen Aktiv-Zustand E zu wechseln.

Mit Hilfe der Figur 6A wird eine individuelle Adressierung der ESL 7 - 9 sowie eine individuelle Beauftragung dieser ESL 7 - 9 mit Hilfe von Einfach-Zeitschlitzbefehlen erörtert. Dargestellt ist nur der erste Zeitschlitz Z1 eingebettet zwischen zwei Synchronisations-Datensignalen SD. In dem Synchronisations-Datensignal SD des ersten Zeitschlitzes Z1 werden von der Station 3 Adressdaten AD, Befehlsdaten CD und Bestätigungszeitdaten ZD eingebettet. Mit Hilfe der Adressdaten AD Hex B2:00:01 wird das ersten ESL 7, mit Hilfe der Adressdaten AD Hex B2:00:02 das zweite ESL 8 und mit Hilfe der Adressdaten AD Hex B2:00:03 das dritte ESL 9 individuell adressiert. Mit Hilfe der Befehlsdaten CD wird an das erste ESL 7 ein "PING"-Befehl, an das zweite ESL 8 ebenfalls ein "PING"-Befehl und an das dritte ESL 9 ein "SWPAG2"-Befehl übermittelt. Diese Befehle sind Einfach-Zeitschlitzbefehle, die unmittelbar nach ihrer Dekodierung im betreffenden ESL 7 - 9 mit vernachlässigbarem Zeitaufwand abgearbeitet werden. Mit Hilfe der beiden "PING"-Befehle wird getestet, ob sich das Adressierte ESL 7, 8 mit Bestätigungsdaten ACD zurückmeldet, also ob es existiert oder überhaupt reagiert und synchronisiert ist. Mit Hilfe des "SWAPG2"-Befehls wird bei dem dritten ESL 9 ein Umschalten von einer (ersten) aktuellen Speicherpage (oder Speicherseite) auf eine zweite Speicherpage (oder Speicherseite) veranlasst, um z.B. das mit Hilfe der Anzeige 27 darzustellende Bild zu verändern, so wie dies im Zusammenhang mit der Figur 4 erörtert wurde. Zudem wird mit dem Synchronisierungs-Datensignal SD ein Bestätigungszeitpunkt für das erste ESL 7 durch Angabe einer ersten Ruhezeitspanne DR1, für das zweite ESL 8 durch Angabe einer zweiten Ruhezeitspanne DR2 und für das dritte ESL 9 durch Angabe einer dritten Ruhezeitspanne DR3 übermittelt. Der Referenzpunkt für die drei Ruhezeitspannen DR1 - DR3 ist immer das Ende der Empfangszeitdauer DE. Die mit Hilfe des Synchronisations-Datensignals SD zum Beginn des ersten Zeitschlitzes Z1 übermittelte Datenstruktur ist in der Fig. 6B visualisiert.

An Stelle der individuellen Ruhezeitspannen DR1 - DR3 können auch maximale Zeitspannen zum Antworten angegeben werden, die sich aus der Summe der jeweiligen Ruhezeitspanne DR1 - DR3 und der Zeitspanne zum Abgeben der Bestätigungsdaten ACD ergeben.

Gemäß der Figur 6A erkennen alle drei ESL 7 - 9, dass sie synchron sind, weil das erste Zeitschlitzsymbol Z1 den für sie bestimmten Zeitschlitz anzeigt (niederwertigstes Byte B0 der Hardware-Adresse ist bei allen drei ESL 7 - 9 Hex 00). Die Prüfung der Adressdaten AD zeigt an, dass jedes ESL 7 - 9 individuell andressiert ist (Existenz der verbleibenden drei Bytes B1 - B3 der jeweiligen Hardware-Adresse in den Adressdaten AD), es werden die für das jeweilige ESL 7 - 9 bestimmten Befehle dekodiert und unmittelbar ausgeführt, sowie die individuellen Bestätigungsdaten ACD nach Ablauf der individuellen Ruhezeitspannen DR1 ... DR 3 nach dem Ende der Empfangszeitdauer DE an die Station 3 übermittelt, die während einer Stations-Empfangszeitdauer SDE zum Empfang der Bestätigungsdaten ACD bereit ist. Die vollständige Abarbeitung der Einfach-Zeitschlitzbefehle inklusive der Kommunikation der Bestätigungsdaten ACD erfolgt in einem ersten Teil 36 des Zeitschlitzes Z1, so dass ein zweiter Teil 37 für andere Aufgabe, wie z.B. die Abarbeitung von Mehrfach-Zeitschlitzbefehlen zur Verfügung steht, worauf in den Figuren 7 bis 8 im Detail eingegangen ist.

In der Figur 7A ist die Abarbeitung eines Mehrfach-Zeitschlitzbefehls dargestellt, bei der das erste ESL 7 über drei benachbarte Zeitschlitze Z1 - Z3 hinweg Gesamtdaten (z.B. betreffend ein gesamtes darzustellendes Bild oder auch nur eine Bildebene des Bildes) zerlegt in drei Datenpakete DAT1 - DAT3 von der Station 3 empfängt. Das erste ESL 7 erkennt mit Hilfe des Synchronisations-Datensignals SD seinen synchronen Zustand und, dass es individuell adressiert ist (Adressaten Hex B2:00:01), empfängt und dekodiert einen "DATA_INIT"-Befehl, mit dem ihm das Empfangen der drei Datenpakete DAT1 - DAT3 in besagten Zeitschlitzen Z1 - Z3 befohlen wird, und geht am Ende der Empfangsdauer DE für eine erste Wartedauer DW1 in den Schlaf-Zustand S, wobei die erste Wartedauer DW1 mit Ende der ersten Hälfte der Zeitschlitzdauer DS abläuft. Zu Beginn des zweiten Teils 37 des ersten Zeitschlitzes Z1 geht die Station 3 in ihren Sendezustand T und das erste ESL 7 in seinen empfangsbereiten Aktiv-Zustand E, sodass es während einer Datenübertragungsdauer DT das erste Datenpaket DAT1 empfängt. Danach bestätigt es mit Hilfe von Teil-Bestätigungsdaten ACD1 während einer Bestätigungszeitdauer DA, während der auch die Station 3 im Empfangszustand E ist, den erfolgreichen Empfang. Die Bestätigungszeitdauer DA endet vor dem Ende des ersten Zeitschlitzes Z1. Nach Ablauf der Bestätigungszeitdauer DA verweilt das erste ESL 7 für eine zweite Wartedauer DW2, die bis zum Ende des ersten Teils 36 des zweiten (nachfolgenden) Zeitschlitzes Z2 reicht, im Schlaf-Zustand S. Zu Beginn des zweiten Teils 37 des zweiten Zeitschlitzes Z2 geht die Station 3 in ihren Sendezustand T und das erste ESL 7 in seinen empfangsbereiten Aktiv-Zustand E, sodass es während einer Datenübertragungsdauer DT das zweite Datenpaket DAT2 empfängt. Gleiches gilt für den dritten Zeitschlitz Z3, mit dessen Ende die Datenübertragung beendet ist. Jedes erfolgreich übermittelte Datenpaket DAT1 - DAT3 wird mit Hilfe der Teil-Bestätigungsdaten ACD1 - ACD3 bestätigt. Die mit Hilfe des Synchronisations-Datensignals SD zum Beginn des ersten Zeitschlitzes Z1 übermittelte Datenstruktur ist in der Fig. 7B visualisiert.

Mit Hilfe der Figur 8A wird eine Datenübertragung unter Verwendung einer Kombination eines Mehrfach-Zeitschlitzbefehls und drei Einfach-Zeitschlitzbefehlen erörtert. Das erste ESL 7 erkennt mit Hilfe des Synchronisations-Datensignals SD seinen synchronen Zustand (niederwertigstes Byte B0 der Hardware-Adresse ist Hex 00) und, dass es individuell adressiert ist (Adressdaten Hex B2:00:01), empfängt und decodiert einen "DATA_INIT"-Befehl, mit dem ihm das Empfangen von drei Datenpakete DAT1 - DAT3 in den Zeitschlitze Z1 - Z3 befohlen wird. Die mit Hilfe des Synchronisations-Datensignals SD zum Beginn des ersten Zeitschlitzes Z1 übermittelte Datenstruktur ist in der Fig. 8B visualisiert. Die Datenübertragung von der Station 3 hin zu dem ersten ESL 7 läuft analog zu der Erörterung der Figur 7A.

Die drei verbleibenden ESL 8 - 10 erkennen zu Beginn des zweiten Zeitschlitzes, dass sie synchron sind, weil das zweite Zeitschlitzsymbol Z2 den für sie bestimmten Zeitschlitz anzeigt (niederwertigstes Byte B0 der Hardware-Adresse ist bei allen drei ESL 8 - 10 Hex 01). Die Prüfung der Adressdaten AD zeigt an, dass jedes ESL 8 - 10 individuell andressiert ist (Existenz der verbleibenden drei Bytes B1 - B3 der jeweiligen Hardware-Adresse in den Adressdaten AD), es werden die für das jeweilige ESL 8 - 10 bestimmten Befehle dekodiert (im vorliegen Fall drei "PING"-Befehle) und unmittelbar ausgeführt, sowie die individuellen Bestätigungsdaten ACD nach einem Verstreichen der individuellen Ruhezeitspannen DR1 - DR3 an die Station 3 übermittelt, so wie dies für die Figur 6A erörtert wurde. Die mit Hilfe des Synchronisations-Datensignals SD zum Beginn des zweiten Zeitschlitzes Z2 übermittelte Datenstruktur ist in der Fig. 8C visualisiert.

Wie deutlich zu sehen ist, werden die drei Einfach-Zeitschlitzbefehle sowie der Mehrfach-Zeitschlitzbefehl im zweiten Zeitschlitz T2 bezogen auf die Zeiteinheit "Zeitschlitz" quasi zeitgleich behandelt, da für den Einfach-Zeitschlitzbefehlen der erste Teil 36 und den Mehrfach-Zeitschlitzbefehl der zweite Teil 37 des zweiten Zeitschlitzes Z2 für die jeweils nötige Datenkommunikation reserviert ist. Die Zuordnung des jeweiligen Befehlstyps zu den Teilen des Zeitschlitzes 36, 37 kann jedoch auch umgekehrt sein.

Es wird abschließend noch einmal darauf hingewiesen, dass es sich bei den vorangehend detailliert beschriebenen Figuren nur um Ausführungsbeispiele handelt, welche vom Fachmann in verschiedenster Weise modifiziert werden können, ohne den Bereich der Erfindung zu verlassen. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können.

## Patentansprüche

1. System (1), aufweisend
- eine Kommunikationsstation (3, 4) zum Kommunizieren mit einer Anzahl von Funk-Tags (7 - 14) mit Hilfe eines Zeitschlitzkommunikationsverfahrens, bei dem in sich wiederholender Folge eine Anzahl von Zeitschlitzen (Z1 - ZN) pro Zeitschlitzzyklus zur Kommunikation bereitstehen und jeder Zeitschlitz (Z1 - ZN) durch ein eindeutiges Zeitschlitzsymbol (ZS1 - ZSN) gekennzeichnet ist, wobei die Kommunikationsstation dazu ausgebildet ist, für den momentan vorliegenden Zeitschlitz (Z1 - ZN) ein Synchronisations-Datensignal (SD) aufweisend das Zeitschlitzsymbol (Z1 - ZN) auszusenden, und wobei
- ein Funk-Tag (7 - 14) ausgebildet ist:
+ zum Wechseln von einem Schlaf-Zustand (S) in einen Aktiv-Zustand (E) zu einem Aufwachzeitpunkt (TA1), und
+ zum Empfangen des Synchronisations-Datensignals (SD) im Aktiv-Zustand (E), und,
+ wenn das empfangene Zeitschlitzsymbol (ZS1 - ZSN) einen für ihn bestimmten Zeitschlitz (Z1 - ZN) anzeigt, zum Definieren eines zu dem nächsten Auftreten des für ihn bestimmten Zeitschlitz (Z1 - ZN) korrespondierenden neuen Aufwachzeitpunkts (TA2) in einem auf den momentan vorliegenden Zeitschlitzzyklus folgenden Zeitschlitzzyklus, und wobei
- der Funk-Tag (7 - 14) eine Anzeigeeinheit (27) zum Wiedergeben eines Bilds (32) aufweist, wobei das Bild (32) in Bildebenen (28, 30) strukturiert ist und jede Bildebene (28, 30) durch Bild-Ebene-Daten (ED1, ED2) repräsentiert ist, wobei der Funk-Tag (7 - 14) zum individuellen Empfangen der Bild-Ebene-Daten (ED1, ED2) und zum Zusammenstellen des Bildes (32) durch Überlagerung der Bildebenen (28, 30) ausgebildet ist, und wobei
- die Kommunikationsstation (3, 4) zum Übertragen der jeweiligen Bild-Ebene-Daten (ED1, ED2) in einer zeitschlitzübergreifenden Kommunikation mit dem Funk-Tag (3, 4) ausgebildet ist.

2. System (1) nach Anspruch 1, wobei
- der Funk-Tag (3, 4) zum Verändern eines bestehenden Bildes (32) durch ein
+ Empfangen von mindestens einer einzigen neuen Bildebene (28, 30) des Bildes (32) und ein
+ Erzeugen des neuen Aussehens des Bildes (32) durch ein Austauschen einer bereits existierenden Bildebene (28, 30) des Bildes (32) durch die soeben empfangene Bildebene (28, 30) ausgebildet ist.

3. System (1) nach den Ansprüchen 1 oder 2, wobei der Funk-Tag (7 - 14) zum Verarbeiten von Bildern (32) ausgebildet ist, bei denen den Bildebenen (28, 30) folgende Bedeutungen zukommen:
- erste oder zweite Häufigkeit (29, 30) der Veränderung von Bildinhalten, oder
- erste oder zweite Farbe von Bildinhalten, oder
- erste oder zweite Informationskategorie von Bildinhalten.

4. System (1) nach einem der vorangehenden Ansprüche, wobei das System (1) ein elektronisches Preisanzeigesystem realisiert und eine Anzeigeeinheit (27) des Funk-Tags (7 - 14) zur Anzeige von Produkt- bzw. Preis-Information usw. dient.

## Claims

1. System (1), comprising
- a communication station (3, 4) for communicating with a number of radio tags (7 - 14) using a time slot communication procedure, in which a number of time slots (Z1 - ZN) per time slot cycle in a repeating sequence are available for communication and each time slot (Z1 - ZN) is **characterized by** a unique time slot symbol (ZS1 - ZSN), wherein the communication station is designed to emit a synchronization data signal (SD) comprising the time slot symbol (Z1 - ZN) for the time slot (Z1 - ZN) currently present, and wherein
- a radio tag (7 - 14) is designed:
+ to switch from a standby state (S) into an active state (E) at a wakeup time (TA1), and
+ to receive the synchronization data signal (SD) in the active state (E), and,
+ if the received time slot symbol (ZS1 - ZSN) indicates a time slot (Z1 - ZN) destined for it, to define a new wakeup time (TA2) corresponding to the next occurrence of the time slot (Z1 - ZN) destined for it in a time slot cycle that follows the currently present time slot cycle, and wherein
- the radio tag (7 - 14) comprises a display unit (27) for reproducing an image (32), wherein the image (32) is structured in image planes (28, 30) and each image plane (28, 30) is represented by image-plane data (ED1, ED2), wherein the radio tag (7 - 14) is designed to individually receive the image-plane data (ED1, ED2) and to assemble the image (32) by superimposing the image planes (28, 30), and wherein
- the communication station (3, 4) is designed to transmit the respective image-plane data (ED1, ED2) in a cross-time-slot communication with the radio tag (3, 4).

2. System (1) according to Claim 1, wherein
- the radio tag (3, 4) is designed to modify an existing image (32) by
+ receiving at least one single new image plane (28, 30) of the image (32) and
+ generating the new appearance of the image (32) by replacing an already existing image plane (28, 30) of the image (32) by the image plane (28, 30) just received.

3. System (1) according to Claims 1 or 2, wherein the radio tag (7 - 14) is designed to process images (32) in which the following meanings are assigned to the image planes (28, 30):
- first or second frequency (29, 30) of the modification of image contents, or
- first or second colour of image contents, or
- first or second information category of image contents.

4. System (1) according to any one of the preceding claims, wherein the system (1) implements an electronic price display system and a display unit (27) of the radio tag (7 - 14) is used to display product and/or price information.

## Revendications

1. Système (1), comprenant
- une station de communication (3, 4) pour communiquer avec une pluralité de balises radio (7-14) à l'aide d'un procédé de communication par tranche de temps, dans lequel une pluralité de tranches de temps (Z1 - ZN) par cycle de tranche de temps est disponible pour la communication et chaque tranche de temps (Z1 - ZN) est identifiée par un symbole de tranche de temps unique (ZS1 - ZSN), dans lequel la station de communication est conçue pour émettre pour la tranche de temps actuellement disponible (Z1 - ZN) un signal de données de synchronisation (SD) présentant le symbole de tranche de temps (Z1 - ZN), et dans lequel
- une balise radio (7-14) est formée:
+ pour passer d'un état de veille (S) à un état actif (E) à une heure de réveil (TA1), et
+ pour recevoir le signal de données de synchronisation (SD) à l'état actif (E) et,
+ si le symbole de tranche de temps reçu (ZS1 - ZSN) indique une tranche de temps (Z1 - ZN) qui lui est destinée, pour en définir une nouvelle heure de réveil (TA2) correspondant à la prochaine occurrence de la tranche de temps (Z1 - ZN) qui lui est destinée dans un cycle de tranche de temps suivant le cycle de tranche de temps actuel, et dans lequel
- la balise radio (7-14) comporte une unité d'affichage (27) pour afficher une image (32), dans lequel l'image (32) est structurée en plans d'image (28, 30) et chaque plan d'image (28, 30) est représenté par des données de plan d'image (ED1, ED2),
dans lequel la balise radio (7-14) est conçue pour recevoir individuellement les données de plan d'image (EDI, ED2) et pour composer l'image (32) en superposant des plans d'image (28, 30), et dans lequel
- la station de communication (3, 4) est conçue pour transmettre les données de plan d'image respectives (ED1, ED2) en communication inter-tranches de temps avec la balise radio (3, 4).

2. Système (1) selon la revendication 1, dans lequel
- la balise radio (3, 4) est conçue pour modifier une image existante (32) par une
+ réception d'au moins un nouveau plan d'image unique (28, 30) de l'image (32) et
+ génération de la nouvelle apparence de l'image (32) en remplaçant un plan d'image déjà existant (28, 30) de l'image (32) par le plan d'image (28, 30) qui vient d'être reçu.

3. Système (1) selon les revendications 1 ou 2, dans lequel la balise radio (7-14) est conçue pour traiter des images (32), dans lesquelles les niveaux d'image (28, 30) ont les significations suivantes:
- la première ou la deuxième fréquence (29, 30) de la modification du contenu de l'image, ou
- une première ou deuxième couleur du contenu de l'image, ou
- une première ou deuxième catégorie d'informations du contenu de l'image.

4. Système (1) selon une quelconque des revendications précédentes, dans lequel le système (1) réalise un système électronique d'affichage des prix et une unité d'affichage (27) de l'étiquette radio (7-14) est utilisée pour afficher des informations sur le produit ou le prix, etc.
